# EUROPEAN PATENT APPLICATION

(11) **EP 4 518 216 A1**
(43) Date of publication of application: **05.03.2025**
(21) Application number: 22939143.8
(22) Date of filing: 28.04.2022
(51) Int. Cl.: H04L 5/00, H04W 72/04

(54) **SIGNAL SENDING APPARATUS AND METHOD, AND SIGNAL RECEIVING APPARATUS AND METHOD**

(71) Applicant: FUJITSU LIMITED, Kawasaki-shi, Kanagawa 211-8588 (JP)
(72) Inventor: ZHANG, Jian, Beijing 100022 (CN); SUN, Gang, Beijing 100022 (CN)
(74) Representative: Haseltine Lake Kempner LLP
(86) International application number: PCT/CN2022/090082
(87) International publication number: WO 2023/206293

(57) **Abstract**

Embodiments of the present application provide signal transmitting and receiving apparatus and method. The method includes: receiving, by a terminal equipment, transmission configuration indication (TCI) state indication information indicating a first uplink or joint TCI state and a second uplink or joint TCI state; receiving, by the terminal equipment, downlink control information (DCI); and performing, by the terminal equipment, uplink transmission based on the first uplink or joint TCI state and/or the second uplink or joint TCI state according to an uplink transmission scheme indicated by the downlink control information.

## Description

### Technical Field

Embodiments of the present application relate to the technical field of communications.

### Background

In the standardization process of Release 17 (Rel-17), the 3GPP standardization organization has carried out standardization related work on the unified transmission configuration indication (TCI). The unified TCI in Rel-17 is designed mainly for sTRP (single transmission and reception point) scenarios.

With the advancement of the standardization work, mTRP (multiple transmission and reception point) has become an important scenario for 5G NR systems, and the purpose of improving throughput or reliability may be achieved through mTRP-based transmission.

In the previous standardization work, in Rel-16, the transmission of mTRP-based Physical Downlink Shared Channel (PDSCH) is standardized; and in Rel-17, the transmission of mTRP-based Physical Downlink Control Channel (PDCCH), Physical Uplink Shared Channel (PUSCH), Physical Uplink Control Channel (PUCCH) is standardized. mTRP transmission includes mTRP transmission based on single Downlink Control Information (sDCI) and mTRP transmission based on multiple DCI (mDCI).

It should be noted that, the above introduction to the background is merely for the convenience of clear and complete description of the technical solution of the present application, and for the convenience of understanding of persons skilled in the art. It cannot be regarded that the above technical solution is commonly known to persons skilled in the art just because that the solution has been set forth in the backgroud of the present application.

### Summary

However, the inventor finds that, the unified TCI in Rel-17 is only applicable to sTRP scenarios, considering the importance of mTRP, it is necessary to design a corresponding unified TCI mechanism for the mTRP scenarios.

In the Rel-17 unified TCI for sTRP (single transmission and reception point) scenario, a network device uses radio resource control (RRC) signaling to configure M (M≥1) TCI states for a terminal equipment, uses a media access control (MAC) control element (CE) to activate N (1≤N≤M) TCI states in M TCI states, and uses downlink control information (DCI) to indicate L (1≤L≤N) TCI states in N TCI states.

A TCI state (TCI for short) may include or correspond to one or two source reference signals (source RSs). The source reference signal may provide Quasi Co-Location (QCL) information for downlink reception, which is called a downlink source reference signal. The source reference signal may provide a reference for the uplink transmission spatial filter (UL TX spatial filter), which is called an uplink source reference signal.

The source reference signal may provide beam information for destination channel/signal. For example, a beam used by a terminal equipment to receive the destination channel/signal is the same as a beam used to receive the downlink source reference signal. For another example, a beam used by a terminal equipment to transmit the destination channel/signal is the same as a beam used to transmit the uplink source reference signal. For another example, a beam used by a terminal equipment to transmit the destination channel/signal is reciprocal with a beam used to receive the downlink source reference signal, that is, the beam in the opposite direction is used.

Therefore, an indication or update of the TCI state actually includes an indication or update of the beam used by the terminal equipment. The TCI state includes joint TCI state, downlink TCI state and uplink TCI state. The source reference signal of the downlink TCI state is a downlink source reference signal, the source reference signal of the uplink TCI state is an uplink source reference signal, and the source reference signal of the joint TCI state is both a downlink source reference signal and an uplink source reference signal. The joint TCI state acts on both a downlink (a receiving beam) beam and an uplink beam (a transmitting beam). In other words, the downlink beam and the uplink beam use the same beam, but are in opposite beam directions, that is, there is reciprocity between the uplink and downlink beams. The downlink TCI state acts only on the downlink beam. The uplink TCI state acts only on the uplink beam. The uplink beam is also called an uplink transmitting spatial filter. A TCI field may indicate joint TCI state (joint DL/UL TCI), or a TCI field may indicate a separate TCI state (separate DL/UL TCI), that is, the downlink TCI state and/or the uplink TCI state. The TCI field indicating whether the joint TCI state or the separate TCI state is configured by RRC signaling.

For the unified TCI of Rel-17, for the joint TCI state, a TCI field indicates a joint TCI state; for the separate TCI state, a TCI field indicates a downlink TCI state, or an uplink TCI state, or a downlink TCI state and an uplink TCI state.

For the unified TCI of mTRP, the terminal equipment may be indicated with two uplink TCI states or joint TCI states. For a terminal equipment with multi-panel uplink transmission capabilities at the same time, it may perform transmission simultaneously using two panels based on two uplink TCI states or joint TCI states. For example, during the action time of two uplink TCI states or joint TCI states, the terminal equipment performs simultaneous multi-panel transmission.

Considering influence of factors such as mobility, channel state change or channel blockage, if the terminal equipment performs simultaneous multi-panel uplink transmission all the time during the action time of two TCI states, it may not be able to provide throughput or reliability guarantee for transmission because it is unable to adapt to the above rapid changes, or may cause additional interference to other devices due to unnecessary multi-panel transmission. In order to solve the above problems, the more ideal way is that the terminal equipment may have a greater degree of freedom to flexibly switch between multiple uplink transmission schemes.

To address at least one of the above problems, embodiments of the present application provide signal transmitting and receiving apparatus and method.

According to another aspect of the embodiments of the present application, there is provided with a signal transmitting method, including:
receiving, by a terminal equipment, transmission configuration indication (TCI) state indication information indicating a first uplink or joint TCI state and a second uplink or joint TCI state;
receiving, by the terminal equipment, downlink control information (DCI); and
performing, by the terminal equipment, uplink transmission based on the first uplink or joint TCI state and/or the second uplink or joint TCI state according to an uplink transmission scheme indicated by the downlink control information.

According to another aspect of the embodiments of the present application, there is provided with a signal receiving method, including:
transmitting, by a network device, transmission configuration indication (TCI) state indication information indicating a first uplink or joint TCI state and a second uplink or joint TCI state;
transmitting, by the network device, downlink control information (DCI); and
receiving, by the network device, uplink transmission; wherein the terminal equipment performs the uplink transmission based on the first uplink or joint TCI state and/or the second uplink or joint TCI state according to an uplink transmission scheme indicated by the downlink control information.

According to another aspect of the embodiments of the present application, there is provided with a signal transmitting apparatus, including:
a first receiving unit configured to receive transmission configuration indication (TCI) state indication information indicating a first uplink or joint TCI state and a second uplink or joint TCI state;
a second receiving unit configured to receive downlink control information (DCI); and
a transmitting unit configured to perform uplink transmission based on the first uplink or joint TCI state and/or the second uplink or joint TCI state according to an uplink transmission scheme indicated by the downlink control information.

According to another aspect of the embodiments of the present application, there is provided with a signal receiving apparatus, including:
a first transmitting unit configured to transmit transmission configuration indication (TCI) state indication information indicating a first uplink or joint TCI state and a second uplink or joint TCI state;
a second transmitting unit configured to transmit downlink control information (DCI); and
a receiving unit configured to receive uplink transmission; wherein the terminal equipment performs the uplink transmission based on the first uplink or joint TCI state and/or the second uplink or joint TCI state according to an uplink transmission scheme indicated by the downlink control information.

According to another aspect of the embodiments of the present application, there is provided with a communication system, including:
a network device configured to transmit transmission configuration indication (TCI) state indication information, the TCI state indication information indicating a first uplink or joint TCI state and a second uplink or joint TCI state, and transmit downlink control information (DCI), and receive uplink transmission; and
a terminal equipment configured to receive the transmission configuration indication (TCI) state indication information, receive the downlink control information (DCI), and perform the uplink transmission based on the first uplink or joint TCI state and/or the second uplink or joint TCI state according to an uplink transmission scheme indicated by the downlink control information.

One of the beneficial effects of the embodiments of the present application is in: the terminal equipment performs the uplink transmission based on the first uplink or joint TCI state and/or the second uplink or joint TCI state according to an uplink transmission scheme indicated by the downlink control information (DCI). As a result, the terminal equipment may switch between at least one multi-panel uplink transmission scheme and/or at least one single-panel uplink transmission scheme to obtain more robust uplink transmission performance, thereby improving uplink transmission throughput or reliability.

With reference to the specification and drawings below, a specific embodiment of the present application is disclosed in detail, which specifies the manner in which the principle of the present application may be adopted. It should be understood that, the scope of the embodiment of the present application is not limited. Within the scope of the clause of the appended claims, the embodiment of the present application includes many variations, modifications and equivalents.

The features described and/or shown for one embodiment may be used in one or more other embodiments in the same or similar manner, may be combined with the features in other embodiments or replace the features in other embodiments.

It should be emphasized that, the term "include/contain" refers to, when being used in the text, existence of features, parts, steps or assemblies, without exclusion of existence or attachment of one or more other features, parts, steps or assemblies.

### Brief Description of the Drawings

Elements and features described in one of the drawings or embodiments of the present application may be combined with the elements and features shown in one or more other drawings or embodiments. Moreover, in the drawings, similar reference signs indicate corresponding parts in several drawings and may be used to indicate corresponding parts used in more than one embodiment.
FIG. 1 is a schematic diagram of a communication system in the embodiments of the present application;
FIG. 2 is a schematic diagram of a signal transmitting method in the embodiments of the present application;
FIG. 3 is an example diagram of an uplink transmission scheme in the embodiments of the present application;
FIG. 4 is another example diagram of an uplink transmission scheme in the embodiments of the present application;
FIG. 5 is another example diagram of an uplink transmission scheme in the embodiments of the present application;
FIG. 6 is an example diagram of correlation between power control parameters and an uplink TCI state or a joint TCI state in the embodiments of the present application;
FIG. 7 is an example diagram of correlation between power control parameters and SRI in the embodiments of the present application;
FIG. 8 is a schematic diagram of a MAC CE in the embodiments of the present application;
FIG. 9 is another schematic diagram of a MAC CE in the embodiments of the present application;
FIG. 10 is another schematic diagram of a MAC CE in the embodiments of the present application;
FIG. 11 is a schematic diagram of a signal receiving method in the embodiments of the present application;
FIG. 12 is a schematic diagram of a signal transmitting apparatus in the embodiments of the present application;
FIG. 13 is a schematic diagram of a signal receiving apparatus in the embodiments of the present application;
FIG. 14 is a schematic diagram of composition of the network device in the embodiments of the present application;
FIG. 15 is a schematic diagram of composition of a terminal equipment in the embodiments of the present application.

### Detailed Description

With reference to the drawings, the foregoing and other features of the present application will become apparent through the following description. The Description and drawings specifically disclose the particular embodiment of the present application, showing part of the embodiment in which the principle of the present application may be adopted, it should be understood that the present application is not limited to the described embodiment, on the contrary, the present application includes all modifications, variations and equivalents that fall within the scope of the appended claims.

In embodiments of the present application, the terms "first", "second", etc., are used to distinguish different elements by their appellation, but do not indicate the spatial arrangement or chronological order of these elements, etc., and these elements shall not be limited by the terms. The term "and/or" includes any and all combinations of one or more of the terms listed in association with the term. The terms "contain", "include", "have", etc., refer to the presence of the stated feature, element, component or assembly, but do not exclude the presence or addition of one or more other features, elements, components or assemblies.

In the embodiments of the present application, the singular forms "one", "the", etc., including the plural forms, shall be broadly understood as "a sort of" or "a kind of" and not limited to the meaning of "one"; furthermore, the term "said" shall be understood to include both the singular form and the plural form, unless it is expressly indicated otherwise in the context. In addition, the term "according to" should be understood to mean "at least partially according to ...", and the term "based on" should be understood to mean "based at least partially on ...", unless it is expressly indicated otherwise in the context.

In embodiments of the present application, the term "communications network" or "wireless communications network" may refer to a network that complies with any of the following communication standards, such as Long Term Evolution (LTE), Enhanced Long Term Evolution (LTE-A), Wideband Code Division Multiple Access (WCDMA), High-Speed Packet Access (HSPA), etc.

In addition, the communication between the devices in the communication system may be carried out according to the communication protocol of any stage, for example, including but not being limited to 1G (generation), 2G, 2.5G, 2.75G, 3G, 4G, 4.5G and 5G, New Radio (NR), etc., and/or other communication protocols currently known or to be developed in the future.

In the embodiments of the present application, the term "network device" refers to, for example, a device in the communication system that connects a terminal equipment to the communication network and provides services to the terminal equipment. The network device may include but is not limited to: a base station (BS), an access point (AP), a transmission reception point (TRP), a broadcast transmitter, a mobile management entity (MME), a gateway, a server, a radio network controller (RNC), a base station controller (BSC), etc.

The base station may include, but is not limited to, a node B (NodeB or NB), an evolution node B (eNodeB or eNB), 5G base station (gNB), etc., and may also include a remote radio head (RRH), a remote radio unit (RRU), a relay, or a low-power node (such as femto, pico, etc.). And the term "base station" may include some or all of their functions, with each base station providing communication coverage to a specific geographic area. The term "cell" may refer to a base station and/or its coverage area, depending on the context in which the term is used.

In the embodiments of the present application, the term "user equipment" (UE) or "terminal equipment or terminal device" (TE) refers, for example, to a device that is connected to the communication network through the network device and receives network services. The terminal equipment may be fixed or movable, and may also be called a mobile station (MS), a terminal, a subscriber station (SS), an access terminal (AT), a station, etc.

The terminal equipment may include but is not limited to: a cellular phone, a personal digital assistant (PDA), a wireless modem, a wireless communication device, a handheld device, a machine-type communication device, a laptop computer, a cordless phone, a smart phone, a smart watch, a digital camera, etc.

For another example, in scenarios such as Internet of Things (IoT), the terminal equipment may also be a machine or an apparatus that performs monitoring or measurement, and may include, but is not limited to, a machine type communication (MTC) terminal, a vehicle communication terminal, a device to device (D2D) terminal, a machine to machine (M2M) terminal, and etc.

In addition, the term "network side" or "network device side" refers to the side of the network, which may be a base station or may include one or more network devices as described above. The term "user side" or "terminal side" or "terminal equipment side" refers to the side of the user or terminal, which may be a UE or may include one or more terminal equipments as described above. Without specifically indicated, "device" may refer to a network device or a terminal equipment.

Hereinafter the scenarios of in the embodiments of the present application are illustrated by examples, but which is not limited in the present application.

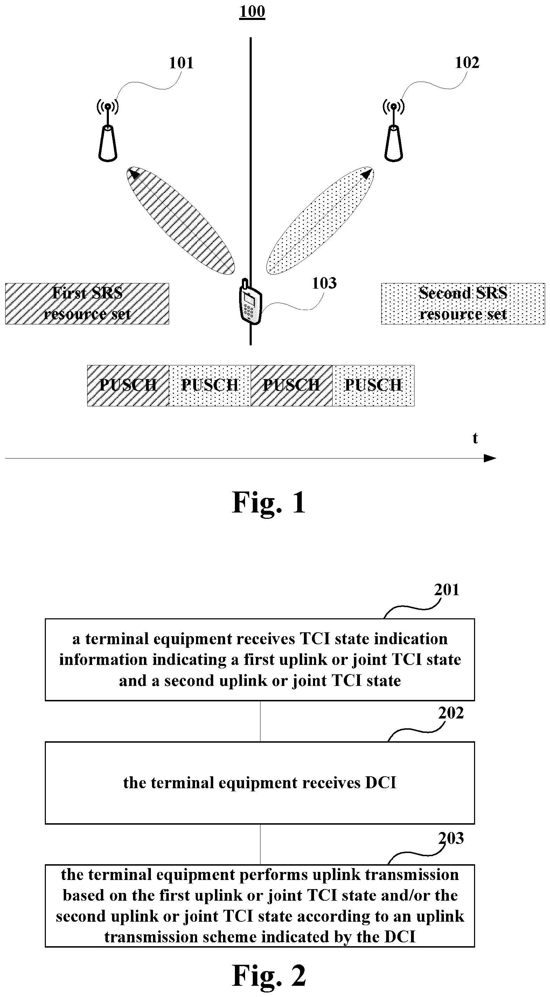

FIG. 1 is a schematic diagram of a communication system in the embodiments of the present application, schematically illustrating a case of the terminal equipment and the network device as examples. As shown in FIG. 1, the communication system 100 may include a first TRP 101, a second TRP 102, and a terminal equipment 103. The first TRP 101 and the second TRP 102 may be network devices. For simplicity, FIG. 1 illustrates only two network devices and one terminal equipment as examples, but which is not limited in the embodiments of the present application.

In the embodiments of the present application, existing services or services that may be implemented in the future may be transmitted between the first TRP 101, the second TRP 102, and the terminal equipment 103. For example, these services may include, but are not limited to, enhanced Mobile Broadband (eMBB), massive Machine Type Communication (mMTC), and Ultra-Reliable and Low-Latency Communication (URLLC), and etc.

Rel-16 standardizes mTRP-based PDSCH transmission, and Rel-17 standardizes mTRP-based PDCCH, PUSCH, PUCCH transmission. mTRP transmission includes sDCI (single DCI)-based mTRP transmission and mDCI (multiple DCI)-based mTRP transmission. For sDCI-based mTRP, a DCI schedules the uplink and downlink transmission of two TRPs, which is more applicable to the case where the backhaul between the TRPs is ideal. For mDCI-based mTRP, two TRPs use two DCIs to respectively schedule the uplink and downlink transmission of their respective TRPs, which is more applicable to the case where the backhaul between the TRPs is not very ideal.

Taking the terminal equipment 103 performing PUSCH transmission in mTRP scenario as an example, as shown in FIG. 1, the terminal equipment 103 transmits PUSCH in a PUSCH repetition manner. For example, the terminal equipment 103 transmits PUSCH to the first TRP 101 in a time slot 1, and transmits PUSCH to the second TRP 102 in a time slot 2, and so on.

The terminal equipment is configured with two SRS resource sets. For example, the terminal equipment 103 is configured with a 1st SRS resource set corresponding to the first TRP 101; the terminal equipment 103 is configured with a 2nd SRS resource set corresponding to the second TRP 102.

Due to geographical difference between the first TRP 101 and the second TRP 102, the terminal equipment may transmit PUSCH to the first TRP 101 and/or the second TRP 102 based on different transmission parameters such as precoded matrices, SRIs (SRS resource indicator), power control parameters, etc. In addition, the terminal equipment obtains transmission parameters for the first TRP 101 and the second TRP 102 based on the 1st SRS resource set and the 2nd SRS resource set.

Taking the transmission parameter being the SRI (SRS resource indicator) as an example, for a dynamic UL grant, two SRI fields in the DCI respectively indicate the SRS resources in the two SRS resource sets; for configured grants, two SRIs are configured by the RRC to two SRS resource sets. Therefore, the terminal equipment needs to know mapping relationship between PUSCH repetition and the SRS resource set, that is, to know each PUSCH repetition should be transmitted based on which SRS resource set.

For Rel-17, the terminal equipment uses only one panel for each uplink transmission. Even if the terminal equipment has multiple panels, the Re-17 does not support using multiple panels for uplink transmission at the same time. Rel-18 will study and standardize simultaneous multi-panel uplink transmission of the terminal equipment and is based on the unified TCI framework and mTRP scenario described above. At present, simultaneous multi-panel uplink transmission has been determined as one of the project contents of Rel-18, and the standardization work of Rel-18 has not yet begun.

To address at least one of the above problems, the embodiments of the present application provide a method, an apparatus, and a system for uplink transmission based on unified TCI in a multi-TRP scenario.

### Embodiments of First Aspect

The embodiments of the present application provide a signal transmitting method, applied to a terminal equipment side.

FIG. 2 is a schematic diagram of a signal transmitting method in the embodiments of the present application. As shown in FIG. 2, the method includes:
201, a terminal equipment receives transmission configuration indication (TCI) state indication information indicating a first uplink or joint TCI state and a second uplink or joint TCI state;
202, the terminal equipment receives downlink control information (DCI);
203, the terminal equipment performs uplink transmission based on the first uplink or joint TCI state and/or the second uplink or joint TCI state, according to an uplink transmission scheme indicated by the downlink control information.

It is worth noting that FIG. 2 above only schematically illustrates the embodiments of the present application, taking a terminal equipment as an example, but the present application is not limited to this. For example, the order of execution between operations may be adjusted appropriately, and some other operations may be added or reduced. In addition, the objects of the above operations may also be adjusted. Those skilled in the art may make appropriate variations in accordance with the above contents, and which is not limited to the disclosure of FIG. 2 above.

In some embodiments, the terms "TRP" and "SRS resource set" may be interchangeable. The terms "TRP" and "CSI-RS resource set" may be interchangeable. The terms "correspond", "associate", and "include" may be interchangeable, and the terms "uplink TCI state" and "joint TCI state" may be interchangeable. The terms "uplink TCI state or joint TCI state" and "uplink or joint TCI state" may be interchangeable. The terms "transmission" and "transmit" are interchangeable; the embodiments of the present application are not limited to this.

In some embodiments, the terminal equipment receives the downlink control information within the action time of the first uplink or joint TCI state and the second uplink or joint TCI state.

In some embodiments, the uplink transmission scheme available to the terminal equipment is the uplink transmission scheme used in at least one of the following situations:
- the terminal equipment is configured with two SRS resource sets;
- DCI format 1_1/1_2 with/without DL assignment indicates transmission configuration indication (TCI) state indication information, the TCI state indication information indicates two uplink TCI states (UL-TCIState) or joint TCI states (DLorJoint-TCIState); DCI format 1_1 or DCI format 1_2 may schedule downlink data, called DCI format 1_1/1_2 with DL assignment, or may not schedule downlink data, called DCI format 1_1/1_2 without DL assignment;
- during the action time of two uplink TCI states or joint TCI states;
- the terminal equipment has at least two panels and has the ability of simultaneous multi-panel uplink transmission.

For example, DCI format 1_1 or DCI format 1_2 indicates two uplink TCI states or joint TCI states, and during the action time of the above two TCI states, DCI format 0_1 or DCI format 0_2 further indicates that the terminal equipment uses a certain uplink transmission scheme for uplink transmission. The uplink transmission scheme may be based on two TCI states, or based on the first TCI state, or based on the second TCI state.

In some embodiments, the downlink control information indicates or activates the uplink transmission, and the uplink transmission includes:
- physical uplink shared channel (PUSCH) transmission based on a dynamic grant; or
- PUSCH transmission based on Type 2 configured grant; or
- physical uplink control channel (PUCCH) transmission; or
- semi-persistent sounding reference signal (SRS) transmission; or
- aperiodic SRS transmission.

In some embodiments, PUSCH based on dynamic grant includes initial transmission and retransmission of PUSCH not based on Type 1/Type 2 configured grant that are scheduled by DCI, and retransmission of PUSCH based on Type 1/Type 2 configured grant that is scheduled by DCI.

In some embodiments, uplink transmission includes transmission of at least one of:
- PUSCH based on dynamic grant;
- PUSCH based on Type 1 configured grant;
- PUSCH based on Type 2 configured grant;
- PUCCH;
- Periodic SRS;
- Semi-persistent SRS;
- Aperiodic SRS.

In some embodiments, the uplink transmission scheme available to the terminal equipment is the uplink transmission scheme in the case where unified TCI is not used. For example, the terminal equipment determines the uplink transmission scheme according to the embodiments of the present application, but does not use the UL TX spatial filter determined based on unified TCI for uplink transmission, but uses the UL TX spatial filter determined based on relevant art for uplink transmission.

The uplink transmission scheme is schematically illustrated hereinafter, and the available uplink transmission scheme may be one or multiple.

In some embodiments, the uplink transmission scheme includes:
a scheme 0: simultaneously performing first uplink transmission based on the first uplink or joint TCI state and performing second uplink transmission based on the second uplink or joint TCI state; wherein the first uplink transmission uses a first set of power control parameters, and the second uplink transmission uses a second set of power control parameters.

In the scheme 0, the terminal equipment simultaneously performs the first uplink transmission and the second uplink transmission respectively to a first transmission reception point and a second transmission reception point by using two panels.

In some embodiments, the uplink transmission scheme includes:
a scheme 1: simultaneously performing first uplink transmission based on the first uplink or joint TCI state and performing second uplink transmission based on the second uplink or joint TCI state, the first uplink transmission and the second uplink transmission using a first set of power control parameters.

In the scheme 1, the terminal equipment simultaneously performs the first uplink transmission and the second uplink transmission to the first transmission reception point by using two panels.

In some embodiments, the uplink transmission scheme includes:
a scheme 2: simultaneously performing first uplink transmission based on the first uplink or joint TCI state and performing second uplink transmission based on the second uplink or joint TCI state, the first uplink transmission and the second uplink transmission using a second set of power control parameters.

In the scheme 2, the terminal equipment simultaneously performs the first uplink transmission and the second uplink transmission to the second transmission reception point by using two panels.

The uplink transmission scheme using multiple panels at the same time is illustrated adaptively, including at least one of the uplink transmission schemes 0 to 2. The uplink transmission scheme using a single panel is illustrated again hereinafter, including at least one of the uplink transmission schemes 3 to 6.

In some embodiments, the uplink transmission scheme includes:
a shceme 3: performing first uplink transmission based on the first uplink or joint TCI state, wherein the first uplink transmission uses a first set of power control parameters.

In the scheme 3, the terminal equipment performs the first uplink transmission to a first transmission reception point by using a panel.

In some embodiments, the uplink transmission scheme includes:
a scheme 4: performing second uplink transmission based on the second uplink or joint TCI state, wherein the second uplink transmission uses a second set of power control parameters.

In the scheme 4, the terminal equipment performs the second uplink transmission to a second transmission reception point by using a panel.

In some embodiments, the uplink transmission scheme includes:
a scheme 5: performing first uplink transmission based on the first uplink or joint TCI state, and performing second uplink transmission based on the second uplink or joint TCI state, via time division multiplexing (TDM); wherein the first uplink or joint TCI state is first based and then the second uplink or joint TCI state is based, the first uplink transmission uses a first set of power control parameters, and the second uplink transmission uses a second set of power control parameters.

In the scheme 5, the terminal equipment first performs the first uplink transmission to a first transmission reception point by using a panel, and then performs the second uplink transmission to a second transmission reception point by using a panel.

In some embodiments, the uplink transmission scheme includes:
a scheme 6: performing first uplink transmission based on the first uplink or joint TCI state, and performing second uplink transmission based on the second uplink or joint TCI state, via time division multiplexing (TDM); wherein the second uplink or joint TCI state is first based and then the first uplink or joint TCI state is based, the first uplink transmission uses a first set of power control parameters, and the second uplink transmission uses a second set of power control parameters.

In the scheme 6, the terminal equipment first performs the second uplink transmission to a second transmission reception point by using a panel, and then performs the first uplink transmission to a first transmission reception point by using a panel.

The uplink transmission schemes 0-6 may be shown as in table 1.

**Table 1**

| Index | Uplink transmission scheme |
|---|---|
| 0 | The terminal equipment uses two panels to perform uplink transmission to the first TRP and the second TRP simultaneously. The uplink transmission to the i-th TRP uses the i-th set of power control parameters, i = 1, 2. |
| 1 | The terminal equipment uses two panels to perform uplink transmission to the first TRP simultaneously. The uplink transmission uses the first set of power control parameters. |
| 2 | The terminal equipment uses two panels to perform uplink transmission to the second TRP simultaneously. The uplink transmission uses the second set of power control parameters. |
| 3 | The terminal equipment uses one panel to perform uplink transmission to the first TRP. The uplink transmission uses the first set of power control parameters. |
| 4 | The terminal equipment uses one panel to perform uplink transmission to the second TRP. The uplink transmission uses the second set of power control parameters. |
| 5 | The terminal equipment performs uplink transmission to the first TRP and the second TRP in a TDM mode, firstly to the first TRP and then to the second TRP, using one panel for each transmission. The uplink transmission to the i-th TRP uses the i-th set of power control parameters, i = 1, 2. |
| 6 | The terminal equipment performs uplink transmission to the first TRP and the second TRP in a TDM mode, firstly to the second TRP and then to the first TRP, using one panel for each transmission. The uplink transmission to the i-th TRP uses the i-th set of power control parameters, i = 1, 2. |

In some embodiments, the uplink transmission scheme of table 1 is equivalent to that of table 2. During the action time of two uplink TCI states or joint TCI states, the i-th state refers to the i-th state of the above two states, i = 1, 2. For example, table 2 shows the uplink transmission schemes of PUSCH.

**Table 2**

| Index | Uplink transmission scheme |
|---|---|
| 0 | The terminal equipment performs uplink transmission based on both the first uplink TCI state or joint TCI state and the second uplink TCI state or joint TCI state. The terminal equipment uses the i-th set of power control parameters for the uplink transmission based on the i-th uplink TCI state or joint TCI state, i = 1, 2. |
| 1 | The terminal equipment performs uplink transmission based on both the first uplink TCI state or joint TCI state and the second uplink TCI state or joint TCI state. The terminal equipment uses the first set of power control parameters for the uplink transmission. |
| 2 | The terminal equipment performs uplink transmission based on both the first uplink TCI state or joint TCI state and the second uplink TCI state or joint TCI state. The terminal equipment uses the second set of power control parameters for the uplink transmission. |
| 3 | The terminal equipment performs uplink transmission based on the first uplink TCI state or joint TCI state. The terminal equipment uses the first set of power control parameters for the uplink transmission. |
| 4 | The terminal equipment performs uplink transmission based on the second uplink TCI state or joint TCI state. The terminal equipment uses the second set of power control parameters for the uplink transmission. |
| 5 | The terminal equipment performs uplink transmission based on the first uplink TCI state or joint TCI state and the second uplink TCI state or joint TCI state in a TDM mode, and the uplink TCI state or joint TCI state is associated with resources used for uplink transmission in the order of "first uplink TCI state or joint TCI state at first, then second uplink TCI state or joint TCI state". The terminal equipment uses the i-th set of power control parameters for the uplink transmission based on the i-th uplink TCI state or joint TCI state, i = 1, 2. |
| 6 | The terminal equipment performs uplink transmission based on the first uplink TCI state or joint TCI state and the second uplink TCI state or joint TCI state in a TDM mode, and the uplink TCI state or joint TCI state is associated with resources used for uplink transmission in the order of "second uplink TCI state or joint TCI state at first, then first uplink TCI state or joint TCI state". The terminal equipment uses the i-th set of power control parameters for the uplink transmission based on the i-th uplink TCI state or joint TCI state, i = 1, 2. |

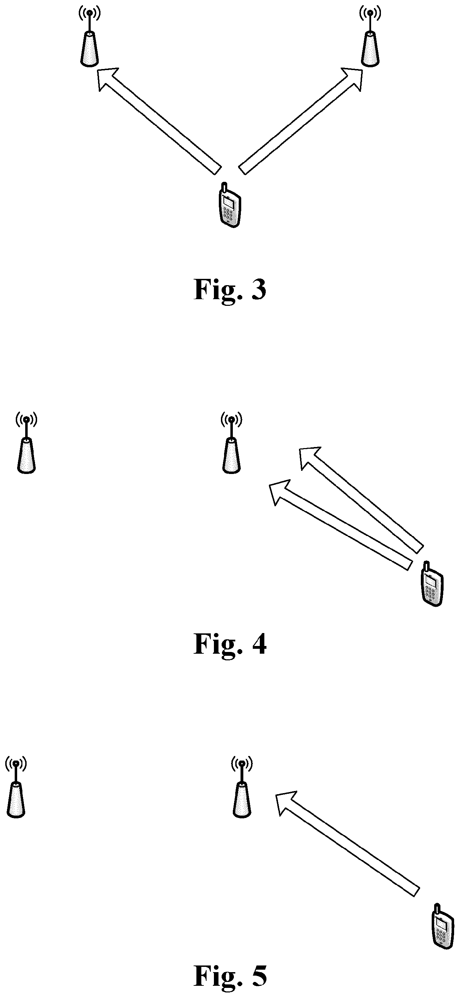

FIG. 3 is an example diagram of an uplink transmission scheme in the embodiments of the present application, schematically illustrating the uplink transmission scheme 0. As shown in FIG. 3, the terminal equipment uses two panels for uplink transmission at the same time, and two panels perform transmission to two TRPs respectively.

FIG. 4 is another example diagram of an uplink transmission scheme in the embodiments of the present application, schematically illustrating the uplink transmission scheme 1 or 2. As shown in FIG. 4, the terminal equipment uses two panels for uplink transmission at the same time, and two panels perform transmission only to a certain TRP.

FIG. 5 is another example diagram of an uplink transmission scheme in the embodiments of the present application, schematically illustrating the uplink transmission scheme 3 or 4. As shown in FIG. 5, the terminal equipment uses one panel for uplink transmission at the same time, and the panel performs transmission only to a certain TRP.

For the uplink transmission scheme 5 or 6, schematic illustration may be given with reference to FIG. 1. Unlike the transmission scheme 0, regardless of whether the terminal equipment has one panel or two panels, in the uplink transmission scheme 5 or 6, the terminal equipment uses only one panel for uplink transmission, but performs transmission to different TRPs at different time units in the way of TDM.

The SRS resource sets and power control parameters are described again hereinafter.

In some embodiments, the first uplink transmission is based on the first SRS resource set, and the second uplink transmission is based on the second SRS resource set. For example, "uplink TCI state or joint TCI state" in Table 2 may be equivalently replaced with "SRS resource set".

In some embodiments, the i-th SRS resource set is associated with the i-th panel, i = 1, 2. For example, the terminal equipment uses the i-th panel to transmit one or more SRSs within the i-th SRS resource set. Based on an SRS, the network device may obtain channel state information of an uplink channel from the i-th panel to the network device, so as to determine the uplink beam, SRI, Transmission Precoding Matrix Information (TPMI) and power control parameters etc. suitable for the i-th panel. SRI may be indicated by the SRS resource indicator field or the Second SRS resource indicator field in the DCI, referred to simply as the SRI field. TPMI may be indicated by the Precoding information and number of layers field or the Second Precoding information field in the DCI, referred to simply as the TPMI field. Considering that the terminal equipment uses the same antenna to transmit SRS and other uplink signals (such as PUSCH), the terminal equipment performs uplink transmission based on the i-th SRS resource set, which is also equivalent to that the terminal equipment uses the i-th panel for uplink transmission.

For example, the SRI field may be the SRS resource indicator field or the Second SRS resource indicator field in standard TS 38.212, and the TPMI field may be either the Precoding information and number of layers field or the Second Precoding information field in standard TS 38.212, which is not limited in the present application.

In some embodiments, the i-th SRS resource set is associated with the i-th uplink TCI state or joint TCI state, i = 1, 2. For example, when the terminal equipment performs uplink transmission based on the i-th SRS resource set, the uplink beam used is determined based on the i-th uplink TCI state or joint TCI state. In the case that the terminal equipment performs uplink transmission based on the i-th SRS resource set, which is equivalent to that the terminal equipment uses the i-th panel for uplink transmission, the uplink beam of the i-th panel of the terminal equipment is determined based on the i-th uplink TCI state or joint TCI state.

In some embodiments, the i-th set of power control parameters are determined based on the i-th uplink TCI state (UL-TCIState) or joint TCI state (DLorJoint-TCIState), i = 1, 2. The power control parameters include at least one of the target receiving power (P0), path loss compensation factor (alpha), path loss reference signal (PL-RS, Pathloss-Reference signal) or a closed loop index. For example, an uplink TCI state or joint TCI state includes or associates a set of power control parameters.

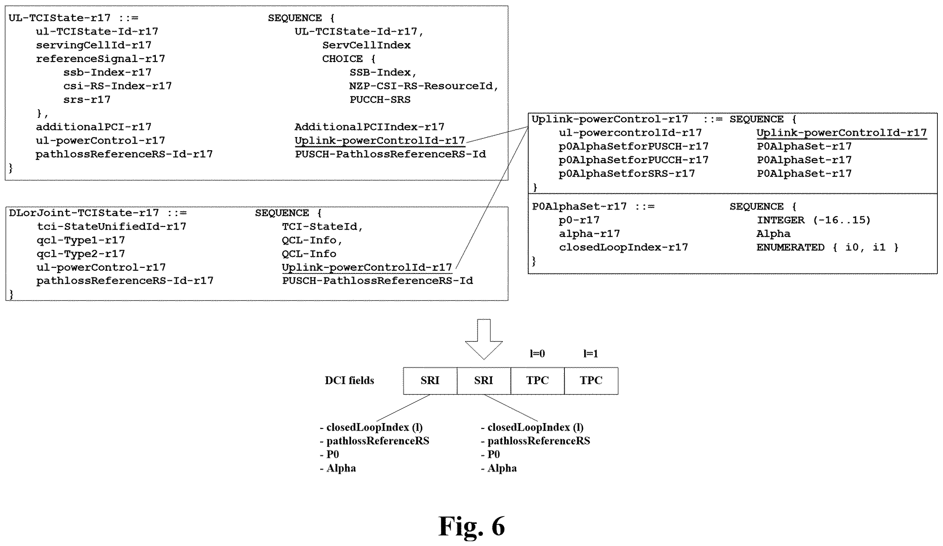

FIG. 6 is an example diagram of correlation between power control parameters and an uplink TCI state or joint TCI state in the embodiments of the present application. As shown in FIG. 6, an RRC IE (Information Element) indicating the uplink TCI state or joint TCI state, i.e. UL-TCIState and DLorJoint-TCIState, includes a path loss reference signal identified as pathlossReferenceRS-Id, associates the target receiving power (p0 in FIG. 6), the path loss compensation factor (alpha in FIG. 6), and the closed-loop index (closedLoopIndex in FIG. 6) by Uplink-powerControlId. The i-th set of power control parameters is further associated with the i-th SRS resource set and with the i-th SRI field in FIG. 6, i = 1, 2. Two TPC (Transmit Power Control) fields in FIG. 6 correspond to closedLoopIndex = 0 (l = 0) and closedLoopIndex = 1 (l = 1) respectively.

In some embodiments, the i-th set of power control parameters is determined based on the SRI field associated with the i-th SRS resource set, i = 1, 2.

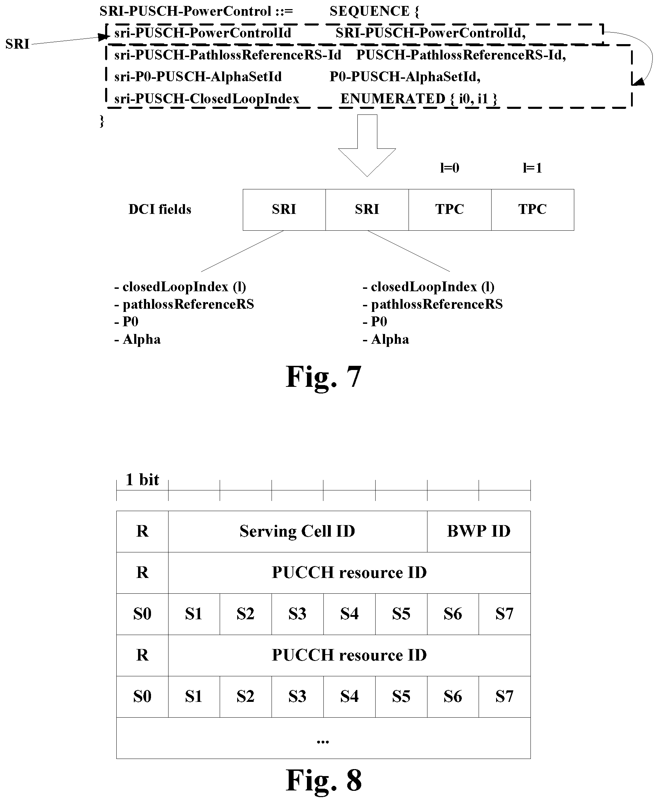

FIG. 7 is an example diagram of correlation between power control parameters and SRI in the embodiments of the present application. As shown in FIG. 7, the i-th SRI field is associated with a sri-PUSCH-PowerControlId, and then with the i-th set of power control parameters, that is, the i-th SRI field is associated with the i-th set of power control parameters by sri-PUSCH-PowerControlId, i = 1, 2.

In some embodiments, the i-th SRI field or TPMI field is determined based on the i-th SRS resource set., i = 1, 2.

In some embodiments, the specific methods for determining the uplink beam, SRI and TPMI may follow the relevant art.

In some embodiments, for multi-transmission reception point (mTRP) based on single downlink control information (sDCI), the terminal equipment performs the uplink transmission according to the downlink control information.

In some embodiments, for multi-transmission reception point (mTRP) based on multi-downlink control information (mDCI), the terminal equipment performs the uplink transmission according to the downlink control information.

In some embodiments, the uplink transmission scheme available to the terminal equipment includes a simultaneous multi-panel uplink transmission scheme, or a multi-panel uplink transmission scheme and a single panel uplink transmission scheme. For example, the available uplink transmission scheme for the terminal equipment may be one or any combination of the multiple uplink transmission schemes described in Table 1 or Table 2.

For example, uplink transmission schemes available for the terminal equipment include:
- uplink transmission scheme 0, or
- uplink transmission scheme 0 and at least one of uplink transmission schemes 1 to 6, or
- at least one of uplink transmission schemes 1 to 2, or
- at least one of uplink transmission schemes 1 to 2 and at least one of uplink transmission schemes 3 to 6.

For example, for mTRP based on sDCI, uplink transmission schemes available for the terminal equipment include:
- uplink transmission scheme 0, or
- uplink transmission scheme 0 and at least one of uplink transmission schemes 1 to 6.

For example, for mTRP based on mDCI, uplink transmission schemes available for the terminal equipment include:
- at least one of uplink transmission schemes 1 to 2, or
- at least one of uplink transmission schemes 1 to 2 and at least one of uplink transmission schemes 3 to 6.

How to configure and/or indicate the uplink transmission scheme is schematically illustrated again hereinafter.

In some embodiments, in the case where the uplink transmission scheme available to the terminal equipment includes more than one uplink transmission scheme, the uplink transmission scheme used by the terminal equipment is indicated by the DCI and/or configured by the RRC signaling.

For example, the uplink transmission scheme available to the terminal equipment includes at least two of uplink transmission schemes 0 to 2. DCI formats 0_1 and/or 0_2 indicate the uplink transmission scheme used by the terminal equipment.

For example, the uplink transmission scheme available to the terminal equipment includes uplink transmission schemes 0 and at least one of uplink transmission schemes 3 and 4, and the DCI formats 0_1 and/or 0_2 indicate the uplink transmission scheme used by the terminal equipment.

For example, the uplink transmission scheme available to the terminal equipment includes uplink transmission schemes 0 and at least one of uplink transmission schemes 3, 4, 5, 6, and the DCI formats 0_1 and/or 0_2 indicate the uplink transmission scheme used by the terminal equipment.

For example, the uplink transmission scheme available to the terminal equipment includes uplink transmission schemes 0 and at least one of uplink transmission schemes 3, 4, 5, 6, and the RRC signaling indicates the uplink transmission scheme used by the terminal equipment.

In some embodiments, the uplink transmission scheme used by the terminal equipment is indicated by an SRS resource set indication field or an SRS request field in the DCI.

In some embodiments, multiple uplink transmission schemes are configured for the terminal equipment via RRC signaling, and one of the multiple uplink transmission schemes is indicated by the downlink control information.

For example, the uplink transmission scheme available to the terminal equipment includes the uplink transmission scheme 0, at least one of the uplink transmission schemes 3 and 4, and at least one of the uplink transmission schemes 5 and 6. The RRC signalling configures an RRC IE (denoted as "multi-panel-simultaneous") for the terminal equipment, and the DCI formats 0_1 and/or 0_2 indicate that the terminal equipment uses one of the uplink transmission schemes 0, 3, or 4, or, the RRC signalling configures an RRC IE (denoted as "multi-panel-TDM") for the terminal equipment, and the DCI formats 0_1 and/or 0_2 indicate that the terminal equipment uses one of the uplink transmission schemes 5, 6, 3, 4. In the case that the terminal equipment is indicated with two uplink TCI states or joint TCI states, the terminal equipment may know whether to use two TCI states for uplink transmission simultaneously (scheme 0) or to use two TCI states for uplink transmission in a TDM mode (schemes 5, 6) according to the RRC signaling. The DCI signaling may further realize the dynamic switching between the uplink transmission scheme using two TCI states (scheme 0) and the uplink transmission scheme using one TCI state (schemes 3, 4), or realize the dynamic switching between the uplink transmission scheme using two TCI states (schemes 5, 6) and the uplink transmission scheme using one TCI state (schemes 3, 4).

In some embodiments, for any of the uplink transmission schemes 0, 1, 2, more than one sub-scheme is included. For example, at least one of the following sub-schemes is included:
- Spatial Division Multiplex (SDM): the two panels of the terminal equipment respectively transmit different layers on two identical resources.
- Frequency Division Multiplex 1 (FDM1): the two panels of the terminal equipment respectively transmit different layers on the two frequency-division multiplexed resources.
- Frequency Division Multiplex 2 (FDM2): the two panels of the terminal equipment respectively transmit two copies on the two frequency-division multiplexed resources.

In some embodiments, for any of the uplink transmission schemes 5, 6, more than one sub-scheme is included. For example, at least one of the following sub-schemes is included:
- Cyclic mapping: the terminal equipment perfoms TDM transmission in an order of 1, 2, 1, and 2.
- Sequential mapping: the terminal equipment performs TDM transmission in an order of 1, 1, 2, and 2.

Here 1 and 2 represent the first and second uplink or joint TCI states, or SRS resource sets, or TRP, respectively.

In some embodiments, the sub-scheme is configured by RRC signaling. For example, if the RRC signaling configures that the terminal equipment uses the FDM1 sub-scheme, the uplink transmission scheme 0 in table 1 is replaced with the sub-scheme (also applicable to the transmission schemes 1 and 2). On this basis, one uplink transmission scheme may be determined among multiple uplink transmission schemes using any of the methods described above.

In some embodiments, the sub-scheme is indicated by the DCI signaling. For example, the uplink transmission scheme 0 in table 1 is replaced with three uplink transmission schemes 0a, 0b, and 0c (also applicable to the transmission schemes 1 and 2), corresponding to the three sub-schemes respectively, and the DCI indicates the sub-schemes used. On this basis, one uplink transmission scheme may be determined among multiple uplink transmission schemes using any of the methods described above.

Hereinafter PUCCH transmission is illustrated, the above schemes are also applicable, and contents the same as what is described above will not be repeated.

In some embodiments, the terminal equipment receives transmission configuration indication (TCI) state indication information indicating a first uplink or joint TCI state and a second uplink or joint TCI state;
the terminal equipment receives downlink control information (DCI); and
the terminal equipment transmits PUCCH based on the first uplink or joint TCI state and/or the second uplink or joint TCI state on the physical uplink control channel (PUCCH) resource indicated by the downlink control information.

In some embodiments, the physical uplink control channel (PUCCH) resource is configured by the RRC signaling or the MAC CE to use one of multiple uplink transmission schemes, and the terminal equipment uses the configured uplink transmission scheme to transmit the PUCCH when the PUCCH resource is indicated by the DCI.

In some embodiments, "the PUCCH resource is indicated by the DCI" may be equivalently replaced with "the PUCCH resource is determined by the PUCCH resource indicator field of DCI and the CCE (Control Channel Element) index of DCI".

For example, the DCI format 1_1 or the DCI format 1_2 indicates two uplink TCI states or joint TCI states, and within the action time of the above two TCI states, the DCI format 1_1 or the DCI format 1_2 indicates the terminal equipment to transmit PUCCH. The PUCCH resource is determined based on the PUCCH resource indicator field of the DCI format 1_1 or the DCI format 1_2, and/or the CCE (Control Channel Element) index of the DCI format 1_1 or the DCI format 1_2. The PUCCH resource is configured by the RRC signaling or the MAC CE to use a certain uplink transmission scheme that may be based on two TCI states, or based on the first TCI state or based on the second TCI state. The terminal equipment transmits PUCCH using the uplink transmission scheme.

For example, when configuring the PUCCH resource using the RRC signaling, a new RRC IE (denoted as "scheme") is used to configure the uplink transmission scheme used by the PUCCH resource, that is, the uplink transmission scheme associated with the PUCCH. Table 3 below schematically illustrates the RRC signaling. The RRC signaling may configure multiple PUCCH resources. The PUCCH resource indicator field in DCI indicates one PUCCH resource among multiple PUCCH resources. When transmitting PUCCH, the terminal equipment uses the uplink transmission scheme associated with the PUCCH resource.

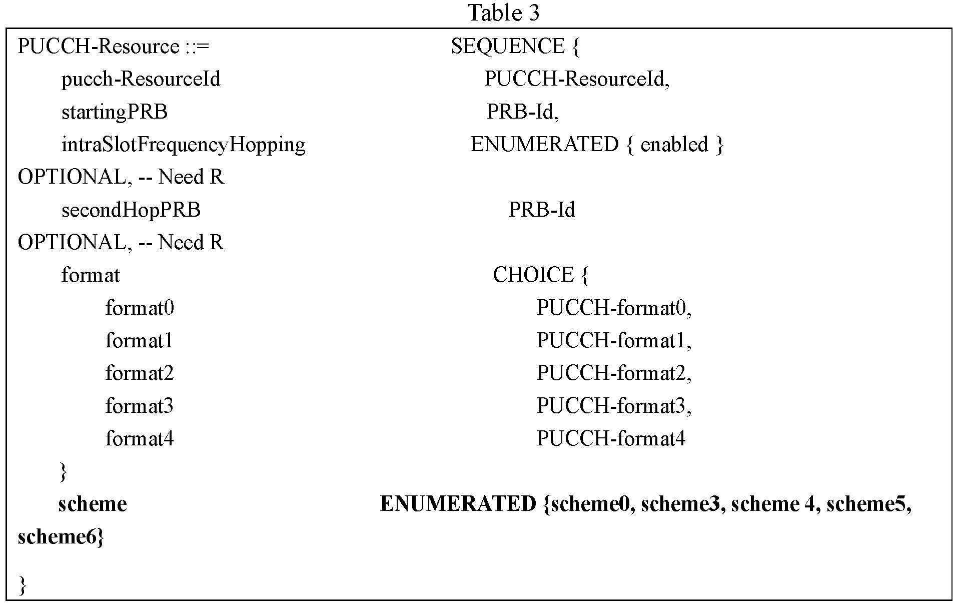

For example, an uplink transmission scheme is associated with the PUCCH resource using the MAC CE. The PUCCH resource configured by the RRC does not include IE that indicates the uplink transmission scheme. The PUCCH resource is associated with the uplink transmission scheme by the MAC CE. When the DCI indicates a PUCCH resource, the PUCCH performs transmission using the uplink transmission scheme configured by the MAC CE.

FIG. 8 is a schematic diagram of an MAC CE in the embodiments of the present application, giving a schematic of MAC CE. Each PUCCH resource ID field identifies a PUCCH resource. Each PUCCH resource ID field is associated with one or more Si fields. One or more Si fields are used to indicate the uplink transmission scheme associated with the PUCCH resource.

For example, assuming that three Si fields (S5 to S7) are used, "000" indicates the uplink transmission scheme 0, "001" indicates the uplink transmission scheme 1, and so on. The unused Si fields (S0 to S4) serve as reserved fields, i.e. equivalent to R fields (reserved fields), and may be marked as R. Without loss of generality, MAC CE may also include other fields that are not shown in FIG. 8.

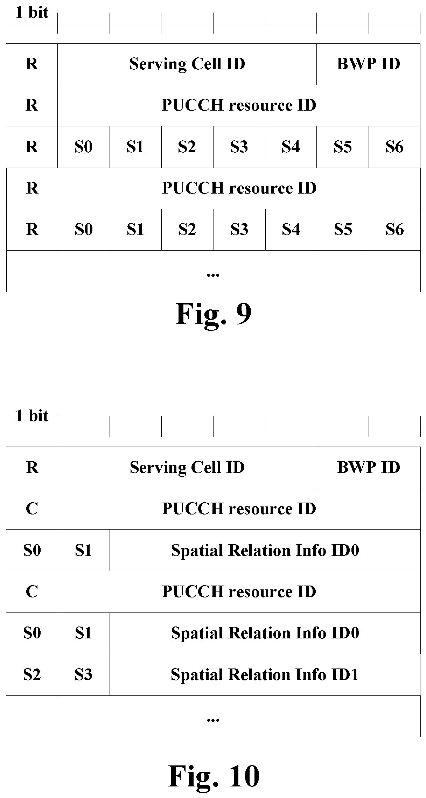

FIG. 9 is another schematic diagram of an MAC CE in the embodiments of the present application. If the Si field is 1 and other Sj fields that j#i are 0, it means that the PUCCH resource identified by the PUCCH resource ID uses the uplink transmission scheme i, i = 0, 1, ... 6. Without loss of generality, MAC CE may also include other fields that are not shown in FIG. 9.

FIG. 10 is another schematic diagram of an MAC CE in the embodiments of the present application. If the field C is 0, it means that the PUCCH resource (PUCCH resource ID) is associated with a Spatial Relation Info (Spatial Relation Info ID0). At least one of the fields S0 and S1 indicates an uplink transmission scheme based on an uplink TCI state or joint TCI state. For example, the field S1 is 1, which indicates the uplink transmission scheme 3; the field S1 is 0, which indicates the uplink transmission scheme 4; and the field S0 is marked as R. If the field C is 1, it means that the PUCCH resource (PUCCH resource ID) is associated with two Spatial Relation Infos (Spatial Relation Info ID0, Spatial Relation Info ID1). At least one of the fields S0, S1, S2, S3 indicates an uplink transmission scheme based on two uplink TCI states or joint TCI states. For example, the fields S0 and S1 are used, "00" indicates the uplink transmission scheme 0, "01" indicates the uplink transmission scheme 5, and "10" indicates the uplink transmission scheme 6, and the fields S2 and S3 are marked as R. Without loss of generality, MAC CE may also include other fields that are not shown in FIG. 10.

In some embodiments, PUCCH uses the unified TCI, the UL TX spatial filter used for transmitting PUCCH is determined based on the uplink or joint TCI state, and the uplink transmission scheme used is determined based on RRC configuration or MAC CE configuration.

In some embodiments, PUCCH does not use the unified TCI, the UL TX spatial filter used for transmitting PUCCH is determined based on Spatial Relation Info, and the uplink transmission scheme used is determined based on RRC configuration or MAC CE configuration.

For example, as shown in FIG. 10, a PUCCH may perform transmission based on one Spatial Relation Info, or it may perform transmission based on two Spatial Relation Infos, depending on whether the PUCCH resource indicated by the DCI is associated with one or two Spatial Relation infos. In a case where the uplink transmission scheme is based on the RRC configuration, the uplink transmission mode of the PUCCH is determined based on "scheme" IE of the RRC configuration. In a case where the uplink transmission scheme is determined based on the MAC CE configuration, the uplink transmission mode of the PUCCH is determined based on the Si field.

In some embodiments, when the DCI indicates the PUCCH resource, the PUCCH performs transmission using the uplink transmission scheme configured by the DCI. For example, during the action time of two uplink TCI states or joint TCI states, the DCI format 1_1 or 1_2 indicates a PUCCH resource, and the DCI also indicates the uplink transmission scheme used to transmit the PUCCH. If the uplink transmission scheme indicated by the DCI uses the i-th uplink TCI state or joint TCI state, then the i-th state refers to the i-th state of the above two uplink TCI states or joint TCI states, i = 1, 2.

The embodiments above only schematically illustrate the present application, but the present application is not limited to this, and appropriate variations may also be made on the basis of the above embodiments. For example, the above embodiments may be used separately, or one or more of the above embodiments may be combined.

As can be seen from the above embodiments, the terminal equipment performs the uplink transmission based on the first uplink or joint TCI state and/or the second uplink or joint TCI state according to an uplink transmission scheme indicated by the downlink control information (DCI). As a result, the terminal equipment may switch between at least one multi-panel uplink transmission scheme and/or at least one single-panel uplink transmission scheme to obtain more robust uplink transmission performance, thereby improving uplink transmission throughput or reliability.

### Embodiments of Second Aspect

The embodiments of the present application provide a signal receiving method, which is illustrated from the side of a network device. The embodiments of the second aspect in the present application may be combined with the embodiments of the first aspect or may be implemented separately. The same content as that is in the embodiments of the first aspect is not repeated.

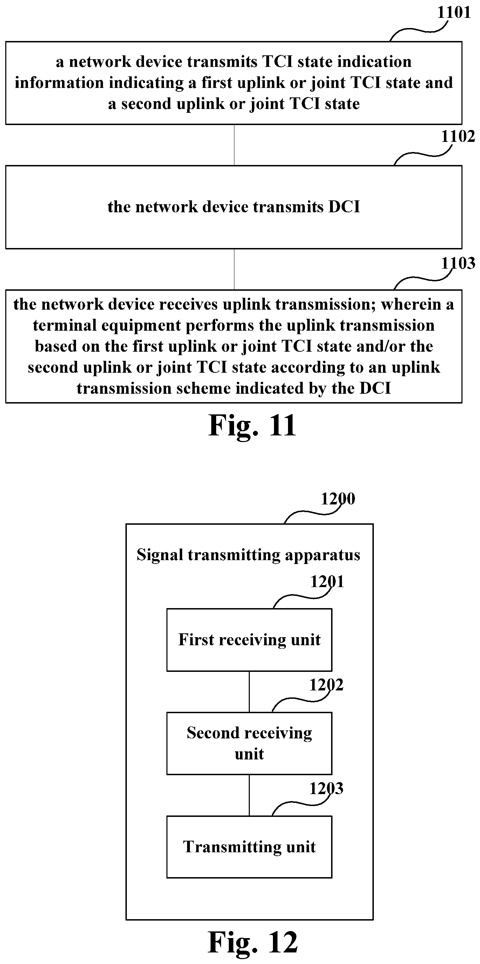

FIG. 11 is a schematic diagram of a signal receiving method in the embodiments of the present application. As shown in FIG. 11, the method includes:
1101, a network device transmits transmission configuration indication (TCI) state indication information indicating a first uplink or joint TCI state and a second uplink or joint TCI state;
1102, the network device transmits downlink control information (DCI); and
1103 the network device receives uplink transmission; wherein the terminal equipment performs the uplink transmission based on the first uplink or joint TCI state and/or the second uplink or joint TCI state according to an uplink transmission scheme indicated by the downlink control information.

It is worth noting that FIG. 11 above only schematically illustrates the embodiments of the present application, but the present application is not limited to this. For example, the order of execution between operations may be adjusted appropriately, and some other operations may be added or reduced. Those skilled in the art may make appropriate variations in accordance with the above contents, and which is not limited to the disclosure of FIG. 11 above.

In some embodiments, the downlink control information indicates or activates the uplink transmission, and the uplink transmission includes:
- physical uplink shared channel (PUSCH) transmission based on a dynamic grant; or
- PUSCH transmission based on Type 2 configured grant; or
- physical uplink control channel (PUCCH) transmission; or
- semi-persistent sounding reference signal (SRS) transmission; or
- aperiodic SRS transmission.

In some embodiments, the uplink transmission scheme includes:
simultaneously performing first uplink transmission based on the first uplink or joint TCI state and performing second uplink transmission based on the second uplink or joint TCI state; wherein the first uplink transmission uses a first set of power control parameters, and the second uplink transmission uses a second set of power control parameters.

In some embodiments, the uplink transmission scheme includes:
simultaneously performing first uplink transmission based on the first uplink or joint TCI state and performing second uplink transmission based on the second uplink or joint TCI state, the first uplink transmission and the second uplink transmission using a first set of power control parameters.

In some embodiments, the uplink transmission scheme includes:
simultaneously performing first uplink transmission based on the first uplink or joint TCI state and performing second uplink transmission based on the second uplink or joint TCI state, the first uplink transmission and the second uplink transmission using a second set of power control parameters.

In some embodiments, the uplink transmission scheme includes:
performing first uplink transmission based on the first uplink or joint TCI state, wherein the first uplink transmission uses a first set of power control parameters.

In some embodiments, the uplink transmission scheme includes:
performing second uplink transmission based on the second uplink or joint TCI state, wherein the second uplink transmission uses a second set of power control parameters.

In some embodiments, the uplink transmission scheme includes:
performing first uplink transmission based on the first uplink or joint TCI state, and performing second uplink transmission based on the second uplink or joint TCI state, via time division multiplexing (TDM); wherein the first uplink or joint TCI state is first based and then the second uplink or joint TCI state is based, the first uplink transmission uses a first set of power control parameters, and the second uplink transmission uses a second set of power control parameters.

In some embodiments, the uplink transmission scheme includes:
performing first uplink transmission based on the first uplink or joint TCI state, and performing second uplink transmission based on the second uplink or joint TCI state, via time division multiplexing (TDM); wherein the second uplink or joint TCI state is first based and then the first uplink or joint TCI state is based, the first uplink transmission uses a first set of power control parameters, and the second uplink transmission uses a second set of power control parameters.

In some embodiments, the first uplink transmission is based on the first SRS resource set, and the second uplink transmission is based on the second SRS resource set.

The embodiments above only schematically illustrate the present application, but the present application is not limited to this, and appropriate variations may also be made on the basis of the above embodiments. For example, the above embodiments may be used separately, or one or more of the above embodiments may be combined.

As can be seen from the above embodiments, the terminal equipment performs the uplink transmission based on the first uplink or joint TCI state and/or the second uplink or joint TCI state according to an uplink transmission scheme indicated by the downlink control information (DCI). As a result, the terminal equipment may switch between at least one multi-panel uplink transmission scheme and/or at least one single-panel uplink transmission scheme to obtain more robust uplink transmission performance, thereby improving uplink transmission throughput or reliability.

### Embodiments of Third Aspect

The embodiments of the present application provide a signal transmitting apparatus. The apparatus may be, for example, a terminal equipment, or one or more parts or components configured in the terminal equipment, and the same content as the embodiments of the first aspect will not be repeated.

FIG. 12 is a schematic diagram of a signal transmitting apparatus in the embodiments of the present application.

As shown in FIG. 12, a signal transmitting apparatus 1200 includes:
a first receiving unit 1201 configured to receive transmission configuration indication (TCI) state indication information indicating a first uplink or joint TCI state and a second uplink or joint TCI state;
a second receiving unit 1202 configured to receive downlink control information (DCI); and
a transmitting unit 1203 configured to perform uplink transmission based on the first uplink or joint TCI state and/or the second uplink or joint TCI state according to an uplink transmission scheme indicated by the downlink control information.

In some embodiments, the second receiving unit 1202 receives the downlink control information within the action time of the first uplink or joint TCI state and the second uplink or joint TCI state.

In some embodiments, the downlink control information indicates or activates the uplink transmission, and the uplink transmission includes:
- physical uplink shared channel (PUSCH) transmission based on a dynamic grant; or
- PUSCH transmission based on Type 2 configured grant; or
- physical uplink control channel (PUCCH) transmission; or
- semi-persistent sounding reference signal (SRS) transmission; or
- aperiodic SRS transmission.

In some embodiments, the uplink transmission scheme includes:
simultaneously performing first uplink transmission based on the first uplink or joint TCI state and performing second uplink transmission based on the second uplink or joint TCI state; wherein the first uplink transmission uses a first set of power control parameters, and the second uplink transmission uses a second set of power control parameters;
wherein the transmitting unit 1203 simultaneously performs the first uplink transmission and the second uplink transmission respectively to a first transmission reception point and a second transmission reception point by using two panels.

In some embodiments, the uplink transmission scheme includes:
simultaneously performing first uplink transmission based on the first uplink or joint TCI state and performing second uplink transmission based on the second uplink or joint TCI state, the first uplink transmission and the second uplink transmission using a first set of power control parameters;
wherein the transmitting unit 1203 simultaneously performs the first uplink transmission and the second uplink transmission to a first transmission reception point by using two panels.

In some embodiments, the uplink transmission scheme includes:
simultaneously performing first uplink transmission based on the first uplink or joint TCI state and performing second uplink transmission based on the second uplink or joint TCI state, the first uplink transmission and the second uplink transmission using a second set of power control parameters;
wherein the transmitting unit 1203 simultaneously performs the first uplink transmission and the second uplink transmission to a second transmission reception point by using two panels.

In some embodiments, the uplink transmission scheme includes:
performing first uplink transmission based on the first uplink or joint TCI state, wherein the first uplink transmission uses a first set of power control parameters;
wherein the transmitting unit 1203 performs the first uplink transmission to a first transmission reception point by using a panel.

In some embodiments, the uplink transmission scheme includes:
performing second uplink transmission based on the second uplink or joint TCI state, wherein the second uplink transmission uses a second set of power control parameters;
wherein the transmitting unit 1203 performs the second uplink transmission to a second transmission reception point by using a panel.

In some embodiments, the uplink transmission scheme includes:
performing first uplink transmission based on the first uplink or joint TCI state, and performing second uplink transmission based on the second uplink or joint TCI state, via time division multiplexing (TDM); wherein the first uplink or joint TCI state is first based and then the second uplink or joint TCI state is based, the first uplink transmission uses a first set of power control parameters, and the second uplink transmission uses a second set of power control parameters;
wherein the transmitting unit 1203 first performs the first uplink transmission to a first transmission reception point by using a panel, and then performs the second uplink transmission to a second transmission reception point by using a panel.

In some embodiments, the uplink transmission scheme includes:
performing first uplink transmission based on the first uplink or joint TCI state, and performing second uplink transmission based on the second uplink or joint TCI state, via time division multiplexing (TDM); wherein the second uplink or joint TCI state is first based and then the first uplink or joint TCI state is based, the first uplink transmission uses a first set of power control parameters, and the second uplink transmission uses a second set of power control parameters;
wherein the transmitting unit 1203 first performs the second uplink transmission to a second transmission reception point by using a panel, and then performs the first uplink transmission to a first transmission reception point by using a panel.

In some embodiments, the first uplink transmission is based on the first SRS resource set, and the second uplink transmission is based on the second SRS resource set.

In some embodiments, for a multi-transmission reception point (mTRP) based on single downlink control information (sDCI), the transmitting unit 1203 performs the uplink transmission according to the downlink control information.

In some embodiments, for a multi-transmission reception point (mTRP) based on multi-downlink control information (mDCI), the transmitting unit 1203 performs the uplink transmission according to the downlink control information.

In some embodiments, multiple uplink transmission schemes are configured for the terminal equipment via RRC signaling, and one of the multiple uplink transmission schemes is indicated by the downlink control information.

In some embodiments, the physical uplink control channel (PUCCH) resource is configured by the RRC signaling or the MAC CE to use one of multiple uplink transmission schemes, and the transmitting unit 1203 uses the configured uplink transmission scheme to transmit the PUCCH in the case where the PUCCH resource is indicated by the DCI.

The embodiments above only schematically illustrate the present application, but the present application is not limited to this, and appropriate variations may also be made on the basis of the above embodiments. For example, the above embodiments may be used separately, or one or more of the above embodiments may be combined.

It is worth noting that only the components or modules related to the present application are illustrated hereinabove, but the present application is not limited to this. The signal transmitting apparatus 1200 may further include other components or modules, and the details of these components or modules may be seen by referring to the related art.

In addition, for the sake of simplicity, FIG. 12 only exemplarily shows the connection relationship or signal trend between the individual components or modules, but it should be clear to those skilled in the art that various related techniques such as bus connections may be employed. The above individual components or modules may be implemented by hardware facilities such as a processor, a memory, a transmitter, a receiver, etc., which is not limited in the present application.

As can be seen from the above embodiments, the terminal equipment performs the uplink transmission based on the first uplink or joint TCI state and/or the second uplink or joint TCI state according to an uplink transmission scheme indicated by the downlink control information (DCI). As a result, the terminal equipment may switch between at least one multi-panel uplink transmission scheme and/or at least one single-panel uplink transmission scheme to obtain more robust uplink transmission performance, thereby improving uplink transmission throughput or reliability.

### Embodiments of Fourth Aspect

The embodiments of the present application provide a signal receiving apparatus. The apparatus may be, for example, a network device, or one or more parts or components configured in the network device, and the same content as the embodiments of the first to third aspects will not be repeated.

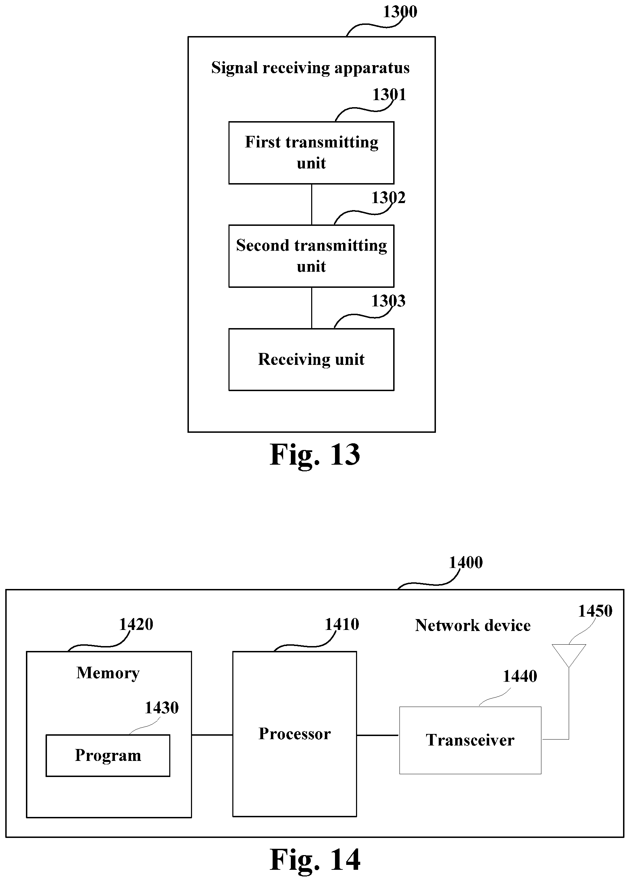

FIG. 13 is a schematic diagram of a signal receiving apparatus in the embodiments of the present application. As shown in FIG. 13, a signal receiving apparatus 1300 includes:
a first transmitting unit 1301 configured to transmit transmission configuration indication (TCI) state indication information indicating a first uplink or joint TCI state and a second uplink or joint TCI state;
a second transmitting unit 1302 configured to transmit downlink control information (DCI); and
a receiving unit 1303 configured to receive uplink transmission; wherein the terminal equipment performs the uplink transmission based on the first uplink or joint TCI state and/or the second uplink or joint TCI state according to an uplink transmission scheme indicated by the downlink control information.

In some embodiments, the downlink control information indicates or activates the uplink transmission, and the uplink transmission includes:
- physical uplink shared channel (PUSCH) transmission based on a dynamic grant; or
- PUSCH transmission based on Type 2 configured grant; or
- physical uplink control channel (PUCCH) transmission; or
- semi-persistent sounding reference signal (SRS) transmission; or
- aperiodic SRS transmission.

In some embodiments, the uplink transmission scheme includes at least one of:
simultaneously performing first uplink transmission based on the first uplink or joint TCI state and performing second uplink transmission based on the second uplink or joint TCI state; wherein the first uplink transmission uses a first set of power control parameters, and the second uplink transmission uses a second set of power control parameters;
simultaneously performing first uplink transmission based on the first uplink or joint TCI state and performing second uplink transmission based on the second uplink or joint TCI state, the first uplink transmission and the second uplink transmission using a first set of power control parameters;
simultaneously performing first uplink transmission based on the first uplink or joint TCI state and performing second uplink transmission based on the second uplink or joint TCI state, the first uplink transmission and the second uplink transmission using a second set of power control parameters;
performing first uplink transmission based on the first uplink or joint TCI state, wherein the first uplink transmission uses a first set of power control parameters;
performing second uplink transmission based on the second uplink or joint TCI state, wherein the second uplink transmission uses a second set of power control parameters;
performing first uplink transmission based on the first uplink or joint TCI state, and performing second uplink transmission based on the second uplink or joint TCI state, via time division multiplexing (TDM); wherein the first uplink or joint TCI state is first based and then the second uplink or joint TCI state is based, the first uplink transmission uses a first set of power control parameters, and the second uplink transmission uses a second set of power control parameters;
performing first uplink transmission based on the first uplink or joint TCI state, and performing second uplink transmission based on the second uplink or joint TCI state, via time division multiplexing (TDM); wherein the second uplink or joint TCI state is first based and then the first uplink or joint TCI state is based, the first uplink transmission uses a first set of power control parameters, and the second uplink transmission uses a second set of power control parameters.

In some embodiments, the first uplink transmission is based on the first SRS resource set, and the second uplink transmission is based on the second SRS resource set.

The embodiments above only schematically illustrate the present application, but the present application is not limited to this, and appropriate variations may also be made on the basis of the above embodiments. For example, the above embodiments may be used separately, or one or more of the above embodiments may be combined.

It is worth noting that only the components or modules related to the present application are illustrated hereinabove, but the present application is not limited to this. The signal receiving apparatus 1300 may further include other components or modules, and the details of these components or modules may be seen by referring to the related art.

In addition, for the sake of simplicity, FIG. 13 only exemplarily shows the connection relationship or signal trend between the individual components or modules, but it should be clear to those skilled in the art that various related techniques such as bus connections may be employed. The above individual components or modules may be implemented by hardware facilities such as a processor, a memory, a transmitter, a receiver, etc., which is not limited in the present application.

As can be seen from the above embodiments, the terminal equipment performs the uplink transmission based on the first uplink or joint TCI state and/or the second uplink or joint TCI state according to an uplink transmission scheme indicated by the downlink control information (DCI). As a result, the terminal equipment may switch between at least one multi-panel uplink transmission scheme and/or at least one single-panel uplink transmission scheme to obtain more robust uplink transmission performance, thereby improving uplink transmission throughput or reliability.

### Embodiments of Fifth Aspect

The embodiments of the present application further provide a communication system, referring to FIG. 1, the same content as the embodiments in the first to fourth aspects will not be repeated.

In some embodiments, a communication system 100 may include at least:
a network device configured to transmit transmission configuration indication (TCI) state indication information, the TCI state indication information indicating a first uplink or joint TCI state and a second uplink or joint TCI state, and transmit downlink control information (DCI), and receive uplink transmission; and
a terminal equipment configured to receive the transmission configuration indication (TCI) state indication information, receive the downlink control information (DCI), and perform the uplink transmission based on the first uplink or joint TCI state and/or the second uplink or joint TCI state according to an uplink transmission scheme indicated by the downlink control information.

The embodiments of the present application further provide a network device, which may be, for example, a base station, but which is not limited in the present application, and may also be other network devices.

FIG. 14 is a schematic diagram of composition of the network device in the embodiments of the present application. As shown in FIG. 14, a network device 1400 may include a processor 1410 (such as a central processing unit (CPU)) and a memory 1420; the memory 1420 is coupled to the processor 1410. The memory 1420 may store various data and also may store program 1430 for information processing, and the program 1430 is executed under the control of the processor 1410.

For example, the processor 1410 may be configured to execute the program to implement the signal receiving method as described in the embodiments of the second aspect. For example, the processor 1410 may be configured to perform the following control of: transmitting transmission configuration indication (TCI) state indication information indicating a first uplink or joint TCI state and a second uplink or joint TCI state; transmitting downlink control information (DCI); and receiving uplink transmission; wherein the terminal equipment performs the uplink transmission based on the first uplink or joint TCI state and/or the second uplink or joint TCI state according to an uplink transmission scheme indicated by the downlink control information.

In addition, as shown in FIG. 14, the network device 1400 may further include: a transceiver 1440 and an antenna 1450, etc.; wherein the functions of the above components are similar to the relevant art, and will not be repeated here. It is worth noting that the network device 1400 is not necessarily required to include all of the components shown in FIG. 14; in addition, the network device 1400 may further include components not shown in FIG. 14, with reference to the relevant art.

The embodiments of the present application further provide a terminal equipment, but which is not limited in the present application, and may also be other devices.

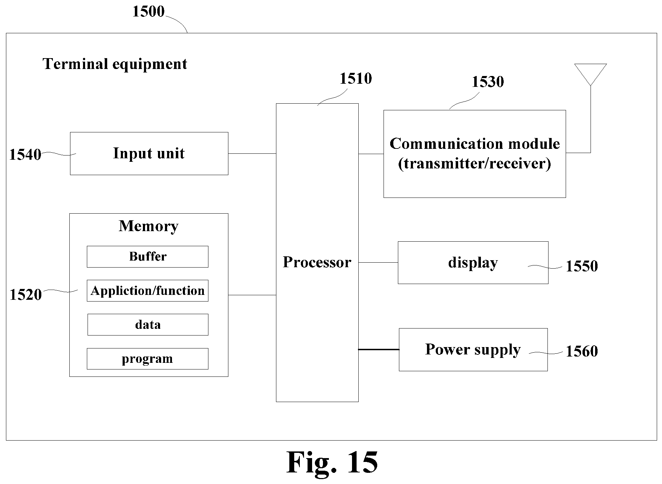

FIG. 15 is a schematic diagram of a terminal equipment in the embodiments of the present application. As shown in FIG. 15, a terminal equipment 1500 may include a processor 1510 and a memory 1520; the memory 1520 stores data and program, and is coupled to the processor 1510. It is worth noting that this figure is exemplary; other types of structures may also be used in addition to or instead of the structure to implement telecommunications functions or other functions.

For example, the processor 1510 may be configured to execute the program to implement the signal transmitting method as described in the embodiments of the first aspect. For example, the processor 1510 may be configured to perform the following control of: receiving transmission configuration indication (TCI) state indication information indicating a first uplink or joint TCI state and a second uplink or joint TCI state; receiving downlink control information (DCI); and performing uplink transmission based on the first uplink or joint TCI state and/or the second uplink or joint TCI state according to an uplink transmission scheme indicated by the downlink control information.

As shown in FIG. 15, the terminal equipment 1500 may further include a communication module 1530, an input unit 1540, a display 1550, and a power supply 1560. The functions of the above components are similar to the relevant art, and will not be repeated here. It is worth noting that the terminal equipment 1500 is not necessarily required to include all of the components shown in FIG. 15, and the above components are not essential; in addition, the terminal equipment 1500 may further include components not shown in FIG. 15, with reference to the relevant art.

The embodiments of the present application further provide a computer program which, when being executed in a terminal equipment, causes the terminal equipment to execute the signal transmitting method described in the embodiments of the first aspect.

The embodiments of the present application further provide a storage medium storing a computer program which causes a terminal equipment to execute the signal transmitting method described in the embodiments of the first aspect.

The embodiments of the present application further provide a computer program which, when being executed in a network device, causes the network device to execute the signal receiving method described in the embodiments of the second aspect.

The embodiments of the present application further provide a storage medium storing a computer program which causes a network device to execute the signal receiving method described in the embodiments of the second aspect.

The above devices and methods of the present application may be implemented by hardware or by hardware combined with software. The present application relates to a computer readable program which, when being executed by a logic unit, enables the logic unit to implement the devices or components mentioned above, or enables the logic unit to implement the methods or steps described above. The present application also relates to storage medium for storing the above programs, such as a hard disk, a magnetic disk, a compact disc, a DVD, a flash memory, etc.

The method/device described in conjunction with the embodiments of the present application may be directly embodied as hardware, a software module executed by the processor, or a combination of both. For example, one or more of the functional block diagrams and/or combination thereof shown in the drawing may correspond to both software modules and hardware modules of the computer program flow. These software modules may correspond to the steps shown in the drawings respectively. These hardware modules can be realized, for example, by solidifying these software modules using field programmable gate arrays (FPGA).

The software module may reside in an RAM memory, a flash memory, an ROM memory, an EPROM memory, an EEPROM memory, a register, a hard disk, a removable disk, a CD-ROM, or a storage medium in any other form known in the art. A storage medium can be coupled to a processor so that the processor may read information from the storage medium and write information to the storage medium; or the storage medium may be a constituent part of the processor. The processor and the storage medium may be located in the ASIC. The software module may be stored in the memory of the mobile terminal or in a memory card that may be inserted into the mobile terminal. For example, if a device (such as a mobile terminal) uses a large-capacity MEGA-SIM card or a large-capacity flash memory device, the software module may be stored in the MEGA-SIM card or the large-capacity flash memory device.

One or more of the functional blocks and/or combination thereof shown in the drawing may be implemented as a general-purpose processor, a digital signal processor (DSP), an application-specific integrated circuit (ASIC), a field programmable gate array (FPGA) or other programmable logic device, a discrete gate or a transistor logic device, a discrete hardware component, or any appropriate combination thereof, for performing the functions described in the present application. One or more of the functional blocks and/or combination thereof shown in the drawing may also be implemented as combination of computing devices, such as combination of DSP and a microprocessor, multiple microprocessors, one or more microprocessors combined with DSP communication, or any other such configuration.

The present application is described in combination with specific embodiments hereinabove, but a person skilled in the art should know clearly that the description is exemplary, but not limitation to the protection scope of the present application. A person skilled in the art may make various variations and modifications to the present application according to spirit and principle of the application, and these variations and modifications should also be within the scope of the present application.

For implementation including the above embodiments, the following appendices are further disclosed:
1. A signal transmitting method, wherein the method includes:
   receiving, by a terminal equipment, transmission configuration indication (TCI) state indication information indicating a first uplink or joint TCI state and a second uplink or joint TCI state;
   receiving, by the terminal equipment, downlink control information (DCI); and
   performing, by the terminal equipment, uplink transmission based on the first uplink or joint TCI state and/or the second uplink or joint TCI state according to an uplink transmission scheme indicated by the downlink control information.
2. The method according to the appendix 1, wherein the terminal equipment receives the downlink control information within the action time of the first uplink or joint TCI state and the second uplink or joint TCI state.
3. The method according to the appendix 1, wherein the downlink control information indicates or activates the uplink transmission, and the uplink transmission includes:
   physical uplink shared channel (PUSCH) transmission based on a dynamic grant; or
   PUSCH transmission based on Type 2 configured grant; or
   physical uplink control channel (PUCCH) transmission; or
   semi-persistent sounding reference signal (SRS) transmission; or
   aperiodic SRS transmission.
4. The method according to any of the appendices 1 to 3, wherein the uplink transmission scheme includes:
   simultaneously performing first uplink transmission based on the first uplink or joint TCI state and performing second uplink transmission based on the second uplink or joint TCI state; wherein the first uplink transmission uses a first set of power control parameters, and the second uplink transmission uses a second set of power control parameters.
5. The method according to the appendix 4, wherein the terminal equipment simultaneously performs the first uplink transmission and the second uplink transmission respectively to a first transmission reception point and a second transmission reception point by using two panels.
6. The method according to any of the appendices 1 to 3, wherein the uplink transmission scheme includes:
   simultaneously performing first uplink transmission based on the first uplink or joint TCI state and performing second uplink transmission based on the second uplink or joint TCI state, the first uplink transmission and the second uplink transmission using a first set of power control parameters.
7. The method according to the appendix 6, wherein the terminal equipment simultaneously performs the first uplink transmission and the second uplink transmission to the first transmission reception point by using two panels.
8. The method according to any of the appendices 1 to 3, wherein the uplink transmission scheme includes:
   simultaneously performing first uplink transmission based on the first uplink or joint TCI state and performing second uplink transmission based on the second uplink or joint TCI state, the first uplink transmission and the second uplink transmission using a second set of power control parameters.
9. The method according to the appendix 8, wherein the terminal equipment simultaneously performs the first uplink transmission and the second uplink transmission to the second transmission reception point by using two panels.
10. The method according to any of the appendices 1 to 9, wherein the uplink transmission scheme includes:
   performing first uplink transmission based on the first uplink or joint TCI state, wherein the first uplink transmission uses a first set of power control parameters.
11. The method according to the appendix 10, wherein the terminal equipment performs the first uplink transmission to a first transmission reception point by using a panel.
12. The method according to any of the appendices 1 to 9, wherein the uplink transmission scheme includes:
   performing second uplink transmission based on the second uplink or joint TCI state, wherein the second uplink transmission uses a second set of power control parameters.
13. The method according to the appendix 12, wherein the terminal equipment performs the second uplink transmission to a second transmission reception point by using a panel.
14. The method according to any of the appendices 1 to 9, wherein the uplink transmission scheme includes:
   performing first uplink transmission based on the first uplink or joint TCI state, and performing second uplink transmission based on the second uplink or joint TCI state, via time division multiplexing (TDM); wherein the first uplink or joint TCI state is first based and then the second uplink or joint TCI state is based, the first uplink transmission uses a first set of power control parameters, and the second uplink transmission uses a second set of power control parameters.
15. The method according to the appendix 14, wherein the terminal equipment first performs the first uplink transmission to a first transmission reception point by using a panel, and then performs the second uplink transmission to a second transmission reception point by using a panel.
16. The method according to any of the appendices 1 to 9, wherein the uplink transmission scheme includes:
   performing first uplink transmission based on the first uplink or joint TCI state, and performing second uplink transmission based on the second uplink or joint TCI state, via time division multiplexing (TDM); wherein the second uplink or joint TCI state is first based and then the first uplink or joint TCI state is based, the first uplink transmission uses a first set of power control parameters, and the second uplink transmission uses a second set of power control parameters.
17. The method according to the appendix 16, wherein the terminal equipment first performs the second uplink transmission to a second transmission reception point by using a panel, and then performs the first uplink transmission to a first transmission reception point by using a panel.
18. The method according to any of the appendices 4 to 17, wherein the first uplink transmission is based on the first SRS resource set, and the second uplink transmission is based on the second SRS resource set.
19. The method according to the appendix 1, wherein for a multi-transmission reception point (mTRP) based on single downlink control information (sDCI), the terminal equipment performs the uplink transmission according to the downlink control information.
20. The method according to the appendix 1, wherein for a multi-transmission reception point (mTRP) based on multi-downlink control information (mDCI), the terminal equipment performs the uplink transmission according to the downlink control information.
21. The method according to any of the appendices 1 to 20, wherein multiple uplink transmission schemes are configured for the terminal equipment via RRC signaling, and one of the multiple uplink transmission schemes is indicated by the downlink control information.
22. The method according to any of the appendices 1 to 21, wherein the physical uplink control channel (PUCCH) resource is configured by RRC signaling or a MAC CE to use one of multiple uplink transmission schemes, and the terminal equipment uses the configured uplink transmission scheme to transmit the PUCCH when the PUCCH resource is indicated by the DCI.
23. The method according to the appendix 1, wherein for a multi-transmission reception point (mTRP) based on single downlink control information (sDCI), the uplink transmission scheme includes:
   simultaneously performing first uplink transmission based on the first uplink or joint TCI state and performing second uplink transmission based on the second uplink or joint TCI state; wherein the first uplink transmission uses a first set of power control parameters, and the second uplink transmission uses a second set of power control parameters; and
   at least one of the following transmission schemes:
      simultaneously performing first uplink transmission based on the first uplink or joint TCI state and performing second uplink transmission based on the second uplink or joint TCI state, the first uplink transmission and the second uplink transmission using a first set of power control parameters;
      simultaneously performing first uplink transmission based on the first uplink or joint TCI state and performing second uplink transmission based on the second uplink or joint TCI state, the first uplink transmission and the second uplink transmission using a second set of power control parameters;
      performing first uplink transmission based on the first uplink or joint TCI state, wherein the first uplink transmission uses a first set of power control parameters;
      performing second uplink transmission based on the second uplink or joint TCI state, wherein the second uplink transmission uses a second set of power control parameters;
      performing first uplink transmission based on the first uplink or joint TCI state, and performing second uplink transmission based on the second uplink or joint TCI state, via time division multiplexing (TDM); wherein the first uplink or joint TCI state is first based and then the second uplink or joint TCI state is based, the first uplink transmission uses a first set of power control parameters, and the second uplink transmission uses a second set of power control parameters;
      performing first uplink transmission based on the first uplink or joint TCI state, and performing second uplink transmission based on the second uplink or joint TCI state, via time division multiplexing (TDM); wherein the second uplink or joint TCI state is first based and then the first uplink or joint TCI state is based, the first uplink transmission uses a first set of power control parameters, and the second uplink transmission uses a second set of power control parameters.
24. The method according to the appendix 1, wherein for a multi-transmission reception point (mTRP) based on multi-downlink control information (mDCI), the uplink transmission scheme includes:
   simultaneously performing first uplink transmission based on the first uplink or joint TCI state and performing second uplink transmission based on the second uplink or joint TCI state, the first uplink transmission and the second uplink transmission using a first set of power control parameters; and
   simultaneously performing first uplink transmission based on the first uplink or joint TCI state and performing second uplink transmission based on the second uplink or joint TCI state, the first uplink transmission and the second uplink transmission using a second set of power control parameters.
25. The method according to the appendix 1, wherein for a multi-transmission reception point (mTRP) based on multi-downlink control information (mDCI), the uplink transmission scheme includes:
   simultaneously performing first uplink transmission based on the first uplink or joint TCI state and performing second uplink transmission based on the second uplink or joint TCI state, the first uplink transmission and the second uplink transmission using a first set of power control parameters; and/or
   simultaneously performing first uplink transmission based on the first uplink or joint TCI state and performing second uplink transmission based on the second uplink or joint TCI state, the first uplink transmission and the second uplink transmission using a second set of power control parameters;
   and at least one of the following transmission schemes:
      performing first uplink transmission based on the first uplink or joint TCI state, wherein the first uplink transmission uses a first set of power control parameters;
      performing second uplink transmission based on the second uplink or joint TCI state, wherein the second uplink transmission uses a second set of power control parameters;
      performing first uplink transmission based on the first uplink or joint TCI state, and performing second uplink transmission based on the second uplink or joint TCI state, via time division multiplexing (TDM); wherein the first uplink or joint TCI state is first based and then the second uplink or joint TCI state is based, the first uplink transmission uses a first set of power control parameters, and the second uplink transmission uses a second set of power control parameters;
      performing first uplink transmission based on the first uplink or joint TCI state, and performing second uplink transmission based on the second uplink or joint TCI state, via time division multiplexing (TDM); wherein the second uplink or joint TCI state is first based and then the first uplink or joint TCI state is based, the first uplink transmission uses a first set of power control parameters, and the second uplink transmission uses a second set of power control parameters.
26. A signal receiving method, wherein the method includes:
   transmitting, by a network device, transmission configuration indication (TCI) state indication information indicating a first uplink or joint TCI state and a second uplink or joint TCI state;
   transmitting, by the network device, downlink control information (DCI); and
   receiving, by the network device, uplink transmission; wherein the terminal equipment performs the uplink transmission based on the first uplink or joint TCI state and/or the second uplink or joint TCI state according to an uplink transmission scheme indicated by the downlink control information.
27. The method according to the appendix 26, wherein the downlink control information indicates or activates the uplink transmission, and the uplink transmission includes:
   physical uplink shared channel (PUSCH) transmission based on a dynamic grant; or
   PUSCH transmission based on Type 2 configured grant; or
   physical uplink control channel (PUCCH) transmission; or
   semi-persistent sounding reference signal (SRS) transmission; or
   aperiodic SRS transmission.
28. The method according to the appendix 26 or 27, wherein the uplink transmission scheme includes:
   simultaneously performing first uplink transmission based on the first uplink or joint TCI state and performing second uplink transmission based on the second uplink or joint TCI state; wherein the first uplink transmission uses a first set of power control parameters, and the second uplink transmission uses a second set of power control parameters.
29. The method according to the appendix 26 or 27, wherein the uplink transmission scheme includes:
   simultaneously performing first uplink transmission based on the first uplink or joint TCI state and performing second uplink transmission based on the second uplink or joint TCI state, the first uplink transmission and the second uplink transmission using a first set of power control parameters.
30. The method according to the appendix 26 or 27, wherein the uplink transmission scheme includes:
   simultaneously performing first uplink transmission based on the first uplink or joint TCI state and performing second uplink transmission based on the second uplink or joint TCI state, the first uplink transmission and the second uplink transmission using a second set of power control parameters.
31. The method according to any of the appendices 26 to 30, wherein the uplink transmission scheme includes:
   performing first uplink transmission based on the first uplink or joint TCI state, wherein the first uplink transmission uses a first set of power control parameters.
32. The method according to any of the appendices 26 to 30, wherein the uplink transmission scheme includes:
   performing second uplink transmission based on the second uplink or joint TCI state, wherein the second uplink transmission uses a second set of power control parameters.
33. The method according to any of the appendices 26 to 30, wherein the uplink transmission scheme includes:
   performing first uplink transmission based on the first uplink or joint TCI state, and performing second uplink transmission based on the second uplink or joint TCI state, via time division multiplexing (TDM); wherein the first uplink or joint TCI state is first based and then the second uplink or joint TCI state is based, the first uplink transmission uses a first set of power control parameters, and the second uplink transmission uses a second set of power control parameters.
34. The method according to any of the appendices 26 to 30, wherein the uplink transmission scheme includes:
   performing first uplink transmission based on the first uplink or joint TCI state, and performing second uplink transmission based on the second uplink or joint TCI state, via time division multiplexing (TDM); wherein the second uplink or joint TCI state is first based and then the first uplink or joint TCI state is based, the first uplink transmission uses a first set of power control parameters, and the second uplink transmission uses a second set of power control parameters.
35. The method according to any of the appendices 27 to 34, wherein the first uplink transmission is based on the first SRS resource set, and the second uplink transmission is based on the second SRS resource set.
36. A signal transmitting method, wherein the method includes:
   receiving, by a terminal equipment, transmission configuration indication (TCI) state indication information indicating a first uplink or joint TCI state and a second uplink or joint TCI state;
   receiving, by the terminal equipment, downlink control information (DCI); and
   transmitting, by the terminal equipment, PUCCH based on the first uplink or joint TCI state and/or the second uplink or joint TCI state on the physical uplink control channel (PUCCH) resource indicated by the downlink control information.
37. The method according to the appendix 36, wherein the PUCCH resource is configured by RRC signaling or a MAC CE to use one of multiple uplink transmission schemes, and the terminal equipment uses the configured uplink transmission scheme to transmit the PUCCH.
38. A signal receiving method, wherein the method includes:
   transmitting, by a network device, transmission configuration indication (TCI) state indication information indicating a first uplink or joint TCI state and a second uplink or joint TCI state;
   transmitting, by the network device, downlink control information (DCI); and
   receiving, by the network device, PUCCH; wherein the terminal equipment transmits the PUCCH based on the first uplink or joint TCI state and/or the second uplink or joint TCI state on the physical uplink control channel (PUCCH) resource indicated by the downlink control information.
39. The method according to the appendix 38, wherein the PUCCH resource is configured by RRC signaling or a MAC CE to use one of multiple uplink transmission schemes, and the terminal equipment uses the configured uplink transmission scheme to transmit the PUCCH.
40. A terminal equipment including a memory storing a computer program and a processor configured to execute the computer program to implement the signal transmitting method according to any of the appendices 1 to 25, 36, 37.
41. A network device including a memory storing a computer program and a processor configured to execute the computer program to implement the signal receiving method according to any of the appendices 26 to 35, 38, 39.

## Claims

1. A signal transmitting apparatus, comprising:
a first receiving unit configured to receive transmission configuration indication (TCI) state indication information, the transmission configuration indication state indication information indicating a first uplink or joint transmission configuration indication state and a second uplink or joint transmission configuration indication state;
a second receiving unit configured to receive downlink control information; and
a transmitting unit configured to perform uplink transmission based on the first uplink or joint transmission configuration indication state and/or the second uplink or joint transmission configuration indication state according to an uplink transmission scheme indicated by the downlink control information.

2. The apparatus according to claim 1, wherein the second receiving unit receives the downlink control information within an effect time of the first uplink or joint transmission configuration indication state and the second uplink or joint transmission configuration indication state.

3. The apparatus according to claim 1, wherein the downlink control information indicates or activates the uplink transmission, and the uplink transmission comprises:
physical uplink shared channel transmission based on a dynamic grant; or
physical uplink shared channel transmission based on a Type 2 configuration grant; or
physical uplink control channel transmission; or
semi-persistent sounding reference signal transmission; or
aperiodic sounding reference signal transmission.

4. The apparatus according to claim 1, wherein the uplink transmission scheme comprises:
simultaneously performing first uplink transmission based on the first uplink or joint transmission configuration indication state and performing second uplink transmission based on the second uplink or joint transmission configuration indication state; wherein the first uplink transmission uses a first set of power control parameters, and the second uplink transmission uses a second set of power control parameters;
wherein the transmitting unit simultaneously performs the first uplink transmission and the second uplink transmission respectively to a first transmission reception point and a second transmission reception point by using two panels.

5. The apparatus according to claim 1, wherein the uplink transmission scheme comprises:
simultaneously performing first uplink transmission based on the first uplink or joint transmission configuration indication state and performing second uplink transmission based on the second uplink or joint transmission configuration indication state, the first uplink transmission and the second uplink transmission using a first set of power control parameters;
wherein the transmitting unit simultaneously performs the first uplink transmission and the second uplink transmission to a first transmission reception point by using two panels.

6. The apparatus according to claim 1, wherein the uplink transmission scheme comprises:
simultaneously performing first uplink transmission based on the first uplink or joint transmission configuration indication state and performing second uplink transmission based on the second uplink or joint transmission configuration indication state, the first uplink transmission and the second uplink transmission using a second set of power control parameters;
wherein the transmitting unit simultaneously performs the first uplink transmission and the second uplink transmission to a second transmission reception point by using two panels.

7. The apparatus according to claim 1, wherein the uplink transmission scheme comprises:
performing first uplink transmission based on the first uplink or joint transmission configuration indication state, wherein the first uplink transmission uses a first set of power control parameters;
wherein the transmitting unit performs the first uplink transmission to a first transmission reception point by using a panel.

8. The apparatus according to claim 1, wherein the uplink transmission scheme comprises:
performing second uplink transmission based on the second uplink or joint transmission configuration indication state, wherein the second uplink transmission uses a second set of power control parameters;
wherein the transmitting unit performs the second uplink transmission to a second transmission reception point by using a panel.

9. The apparatus according to claim 1, wherein the uplink transmission scheme comprises:
performing first uplink transmission based on the first uplink or joint transmission configuration indication state, and performing second uplink transmission based on the second uplink or joint transmission configuration indication state, via time division multiplexing; wherein the first uplink or joint transmission configuration indication state is first based and then the second uplink or joint transmission configuration indication state is based, the first uplink transmission uses a first set of power control parameters, and the second uplink transmission uses a second set of power control parameters;
wherein the transmitting unit first performs the first uplink transmission to a first transmission reception point by using a panel, and then performs the second uplink transmission to a second transmission reception point by using a panel.

10. The apparatus according to claim 1, wherein the uplink transmission scheme comprises:
performing first uplink transmission based on the first uplink or joint transmission configuration indication state, and performing second uplink transmission based on the second uplink or joint transmission configuration indication state, via time division multiplexing; wherein the second uplink or joint transmission configuration indication state is first based and then the first uplink or joint transmission configuration indication state is based, the first uplink transmission uses a first set of power control parameters, and the second uplink transmission uses a second set of power control parameters;
wherein the transmitting unit first performs the second uplink transmission to a second transmission reception point by using a panel, and then performs the first uplink transmission to a first transmission reception point by using a panel.

11. The apparatus according to claim 1, wherein the first uplink transmission is based on a first sounding reference signal resource set, and the second uplink transmission is based on a second sounding reference signal resource set.

12. The apparatus according to claim 1, wherein for a multi-transmission reception point based on single downlink control information, the transmitting unit performs the uplink transmission according to the downlink control information.

13. The apparatus according to claim 1, wherein for a multi-transmission reception point based on multi-downlink control information, the transmitting unit performs the uplink transmission according to the downlink control information.

14. The apparatus according to claim 1, wherein multiple uplink transmission schemes are configured for a terminal equipment via radio resource control signaling, and one of the multiple uplink transmission schemes is indicated by the downlink control information.

15. The apparatus according to claim 1, wherein a physical uplink control channel resource is configured by radio resource control signaling or a media access control (MAC) control element (CE) to use one of multiple uplink transmission schemes, and when the downlink control information indicates a physical uplink control channel resource, the transmitting unit transmits a physical uplink control channel by using a configured uplink transmission scheme.

16. A signal receiving apparatus, wherein the apparatus comprises:
a first transmitting unit configured to transmit transmission configuration indication state indication information, the transmission configuration indication state indication information indicating a first uplink or joint transmission configuration indication state and a second uplink or joint transmission configuration indication state;
a second transmitting unit configured to transmit downlink control information; and
a receiving unit configured to receive uplink transmission, wherein a terminal equipment performs the uplink transmission based on the first uplink or joint transmission configuration indication state and/or the second uplink or joint transmission configuration indication state according to an uplink transmission scheme indicated by the downlink control information.

17. The apparatus according to claim 16, wherein the downlink control information indicates or activates the uplink transmission, and the uplink transmission comprises:
physical uplink shared channel transmission based on a dynamic grant; or
physical uplink shared channel transmission based on a Type 2 configuration grant; or
physical uplink control channel transmission; or
semi-persistent sounding reference signal transmission; or
aperiodic sounding reference signal transmission.

18. The apparatus according to claim 16, wherein the uplink transmission scheme comprises at least one of the following:
simultaneously performing first uplink transmission based on the first uplink or joint transmission configuration indication state and performing second uplink transmission based on the second uplink or joint transmission configuration indication state; wherein the first uplink transmission uses a first set of power control parameters, and the second uplink transmission uses a second set of power control parameters;
simultaneously performing first uplink transmission based on the first uplink or joint transmission configuration indication state and performing second uplink transmission based on the second uplink or joint transmission configuration indication state, the first uplink transmission and the second uplink transmission using a first set of power control parameters;
simultaneously performing first uplink transmission based on the first uplink or joint transmission configuration indication state and performing second uplink transmission based on the second uplink or joint transmission configuration indication state, the first uplink transmission and the second uplink transmission using a second set of power control parameters;
performing first uplink transmission based on the first uplink or joint transmission configuration indication state, wherein the first uplink transmission uses a first set of power control parameters;
performing second uplink transmission based on the second uplink or joint transmission configuration indication state, wherein the second uplink transmission uses a second set of power control parameters;
performing first uplink transmission based on the first uplink or joint transmission configuration indication state, and performing second uplink transmission based on the second uplink or joint transmission configuration indication state, via time division multiplexing; wherein the first uplink or joint transmission configuration indication state is first based and then the second uplink or joint transmission configuration indication state is based, the first uplink transmission uses a first set of power control parameters, and the second uplink transmission uses a second set of power control parameters; or
performing first uplink transmission based on the first uplink or joint transmission configuration indication state, and performing second uplink transmission based on the second uplink or joint transmission configuration indication state, via time division multiplexing; wherein the second uplink or joint transmission configuration indication state is first based and then the first uplink or joint transmission configuration indication state is based, the first uplink transmission uses a first set of power control parameters, and the second uplink transmission uses a second set of power control parameters.

19. The apparatus according to claim 16, wherein the first uplink transmission is based on a first sounding reference signal resource set, and the second uplink transmission is based on a second sounding reference signal resource set.

20. A communication system comprising:
a network device configured to transmit transmission configuration indication state indication information, the transmission configuration indication state indication information indicating a first uplink or joint transmission configuration indication state and a second uplink or joint transmission configuration indication state, transmit downlink control information, and receive uplink transmission; and
a terminal equipment configured to receive the transmission configuration indication state indication information, receive the downlink control information, and perform the uplink transmission based on the first uplink or joint transmission configuration indication state and/or the second uplink or joint transmission configuration indication state according to an uplink transmission scheme indicated by the downlink control information.
